# EUROPEAN PATENT SPECIFICATION

(11) **EP 3 254 965 B1**
(45) Date of publication and mention of the grant of the patent: **05.08.2020**
(21) Application number: 16173150.0
(22) Date of filing: 06.06.2016
(51) Int. Cl.: B64D 11/00

(54) **INSTALLATION RAIL ARRANGEMENT**
MONTAGESCHIENENANORDNUNG
DISPOSITIF DE RAIL DE MONTAGE

(43) Date of publication of application: 13.12.2017
(73) Proprietor: Airbus Operations GmbH, 21129 Hamburg (DE)
(72) Inventor: Dietrich, Steffen, 21129 Hamburg (DE); Benthien, Hermann, 21129 Hamburg (DE); Telkamp, Michael, 21129 Hamburg (DE)
(74) Representative: Schicker, Silvia

(56) References cited:
- WO-A1-2014/088600
- DE-A1-102005 054 890
- DE-A1-102009 050 736
- RU-C1- 2 582 740
- US-A- 4 648 570

## Description

The present invention relates to an installation rail arrangement suitable for being mounted in an aircraft.

The primary structure of an aircraft typically comprises a plurality of stringers extending substantially parallel to each other along a longitudinal axis of the aircraft fuselage and carrying the aircraft outer skin. A plurality of frames that extend substantially parallel to each other in a circumferential direction of the aircraft fuselage are attached to the stringers via suitable fastening cleats protruding from the stringers in a direction towards an interior of the aircraft fuselage. Components to be installed in the aircraft fuselage such as, for example, cabin interior components like overhead luggage compartments, lining panels and electronic components, fluid lines and electrical wiring are either directly fastened to the stringers and/or frames of the aircraft's primary structure at defined attachment points or are connected to the stringers and/or frames via a suitable carrier module, for example a carrier module as described in EP 2 809 580 A1 and US 2014/0332640 A1.

The components of the aircraft's primary structure are positioned with certain tolerances. In particular, the typical positional tolerance for the fastening cleats and the frames is ± 3 mm in a direction along the longitudinal axis of the aircraft fuselage. Further, during flight operation of an aircraft, the aircraft outer skin typically is exposed to temperatures in the range of about -55°C. An aircraft cabin in the interior of the aircraft fuselage, however, usually is held at a temperature of approximately +20°C, resulting in a temperature difference between the aircraft outer skin and the aircraft cabin during flight operation of the aircraft of approximately 75°C. To the contrary, during ground operation of the aircraft, the temperature difference between the aircraft outer skin and the aircraft cabin usually is much less than during flight operation of the aircraft. Due to thermally induced deformations, the distances between adjacent fastening cleats and frames thus vary in dependence on whether the aircraft is on the ground or in flight.

RU 2 582 740 C1 relates to a structure for fastening components of interior equipment in a passenger compartment of an aircraft. A main bracket is fastened to a bulkhead, and a first, second and third bracket is connected rigidly by one end to the main bracket. Another end of the bracket is joined to a system support, which is formed from several sequentially connected profiles having a U-shape in cross-section. The first bracket is rigidly connected to flanges of a profile and allows sliding of a further profile along a slot. The second bracket is connected to slots of two plates enabling sliding of the second bracket along the slots, while the plates are rigidly connected to the profiles. The third bracket has a slot through which passes a bolt, which also passes through corresponding openings in the flanges of the profile thereby allowing sliding of the main bracket along the profile. Loads in a plane perpendicular to the longitudinal direction of the system supports are transmitted to the bulkheads by the first, second and third bracket, while the transmission of a load in the longitudinal direction is achieved by fittings, which are connected in turn by a tie rod to framework elements of the fuselage.

It is an object of the present invention to provide an installation rail arrangement suitable for being mounted in an aircraft that allows for a compensation of thermally induced deformations of primary structure components in a direction along a longitudinal axis of the installation rail arrangement while still ensuring an optimum transmission of loads acting in the direction along the longitudinal axis of the installation rail arrangement from an installation rail to the primary structure components.

This object is solved by an installation rail arrangement as defined in independent claim 1. Preferred embodiments are defined by the dependent claims.

An installation rail arrangement suitable for being mounted in an aircraft comprises a plurality of primary structure components arranged one behind another in a direction along a longitudinal axis of the installation rail arrangement. The primary structure components may be frames or fastening cleats protruding from a stringer and serving to attach a frame to the stringer. Further, the installation rail arrangement comprises an installation rail which serves to attach at least one equipment component to the primary structure components. The installation rail includes a plurality of connecting portions and a carrier portion. Each connecting portion is connected to an associated primary structure component in order to fasten the installation rail to the plurality of primary structure components. The carrier portion extends from the plurality of connecting portions in the direction along the longitudinal axis of the installation rail arrangement and is adapted to carry the at least one equipment component to be attached to the primary structure components.

A selected pair of a first primary structure component and an associated first connecting portion of the installation rail arrangement is configured to define a fixed bearing adapted to connect the first primary structure component and the associated first connecting portion so as to be non-displaceable relative to each other in the direction along the longitudinal axis of the installation rail arrangement. Preferably, the selected pair of the first primary structure component and the associated first connecting portion, in the direction along the longitudinal axis of the installation rail arrangement, is arranged in a central position. For example, in case the installation rail arrangement comprises five primary structure components, the selected pair of the first primary structure component and the associated first connecting portion, in the direction along the longitudinal axis of the installation rail arrangement, may be arranged at a third position.

At least one pair of a second primary structure component and an associated second connecting portion of the installation rail arrangement is configured to define a floating bearing adapted to connect the second primary structure component and the associated second connecting portion so as to be allow a relative displacement between the second primary structure component and the associated second connecting portion in the direction along the longitudinal axis of the installation rail arrangement. The floating bearing allows a displacement of the second primary structure component relative to the first primary structure component and also relative to the associated second connecting portion and hence the entire installation rail and thus prevents the development of stresses resulting from such a displacement in both the primary structure components and the installation rail. Consequently, a displacement of the second primary structure component relative to the first primary structure component and the installation rail which may result, for example, from a thermally induced deformation of the primary structure components can be compensated for.

In a preferred embodiment of the installation rail arrangement, the design of a floating bearing defined by pair of a second primary structure component and an associated second connecting portion of the installation rail arrangement varies in dependence on a distance of the second primary structure component from the first primary structure component. In particular, a floating bearing should be designed so as to be able to compensate for a larger relative displacement between the second primary structure component and the associated second connecting portion in the direction along the longitudinal axis of the installation rail arrangement the farther away the floating bearing is arranged from the fixed bearing defined by the first primary structure component and the associated first connecting portion.

The installation rail arrangement further comprises a plurality of load transmission elements. Each load transmission element is rigidly connected to one of the installation rail and a second primary structure component which, together with an associated second connecting portion, defines a floating bearing. Each load transmission element comprises a first contact face adapted to interact with a complementary second contact face provided on the other one of the installation rail and the second primary structure component, in order to transfer loads acting in the direction along the longitudinal axis of the installation rail arrangement from the installation rail to the second primary structure component. Thus, in case the load transmission element is rigidly connected to the installation rail, the first contact face provided on the load transmission element interacts with a complementary second contact face provided on the second primary structure component in order to transfer loads acting in the direction along the longitudinal axis of the installation rail arrangement from the installation rail to the second primary structure component. To the contrary, in case the load transmission element is rigidly connected to the second primary structure component, the first contact face provided on the load transmission element interacts with a complementary second contact face provided on the installation rail in order to transfer loads acting in the direction along the longitudinal axis of the installation rail arrangement from the installation rail to the second primary structure component.

In a first operational state of the installation rail arrangement, a gap is present between the first and the second contact face, in the direction along the longitudinal axis of the installation rail arrangement. To the contrary, in a second operational state of the installation rail arrangement, the first and the second contact face contact each other. The interaction between the first and the second contact face, in particular in the second operational state of the installation rail arrangement, ensures an optimum transmission of loads acting in the direction along the longitudinal axis of the installation rail arrangement from the installation rail to the primary structure components. Thus, the installation rail arrangement meets the load bearing and load transmission requirements for aircraft primary structure interfaces.

In a preferred embodiment of the installation rail arrangement, the gap which is present between the first and the second contact face in the first operational state of the installation rail arrangement is dimensioned in such a manner that the gap is eliminated due to a thermally induced repositioning of the primary structure components upon changing the operational state of the installation rail arrangement from the first operational state to the second operational state. The first operational state of the installation rail arrangement may, for example, be a ground operational state, i.e. a state wherein an aircraft equipped with the installation rail arrangement is operated on the ground. In a ground operational state of the installation rail arrangement only a limited temperature difference exists between an aircraft environment and an interior of the aircraft. Hence the second primary structure component is arranged at a first distance from the first primary structure component which allows the gap to be present between the first and the second contact face.

The second operational state of the installation rail arrangement may, for example, be a flight operational state, e. a state wherein an aircraft equipped with the installation rail arrangement is operated in flight. In a flight operational state of the installation rail arrangement, a significant temperature difference exists between an aircraft environment and an interior of the aircraft. Hence the second primary structure component is arranged at a second distance from the first primary structure component which is smaller than the first distance between the second primary structure component and the first primary structure component in the first operational state. In case the gap, i.e. the distance between the first and the second contact face in the first operational state of the installation rail arrangement is adjusted to the thermally induced repositioning, the primary structure components experience upon changing the operational state of the installation rail arrangement from a ground operational state to a flight operational state, the gap between the first and the second contact face is closed and, in the flight operational state of the installation rail arrangement, the first and the second contact face contact each other.

Each of the plurality of connecting portions of the installation rail may have a substantially U-shaped cross-section with two arms that extend in the direction along the longitudinal axis of the installation rail arrangement at a distance from each other so as to receive an associated primary structure component therebetween. Such a configuration of the connecting portions allows fast and secure connection of the installation rail to the primary structure components.

In a preferred embodiment of the installation rail arrangement, the first primary structure component and the associated first connecting portion which define the fixed bearing are connected to each other by means of a first fastening bolt. The first fastening bolt may be received in a corresponding first bore extending through the first primary structure component and the associated first connecting portion in a direction substantially perpendicular to the longitudinal axis of the installation rail arrangement. For example, the first bore may extend through the arms of the first connecting portion and a region of the first primary structure component received between said arms. The first fastening bolt and the first bore may be shaped and dimensioned so as to allow the first fastening bolt to be received in the first bore in a form-fit manner. In particular, the first fastening bolt and the first bore may have corresponding for example circular cross-sectional shapes.

It is, however, also conceivable to provide a form-fit between the first fastening bolt and a first portion of the first bore that extends through the first connecting portion, but design a second portion of the first bore that extends through the first primary structure component as an elongated hole with a longitudinal axis extending parallel to the longitudinal axis of the installation rail arrangement. The first fastening bolt then can easily be introduced into the second portion of the first bore even in case the first primary structure component and the associated first connecting portion are not perfectly aligned, for example due to a positional tolerance of the first primary structure component.

In the latter case, each arm of the first connecting portion, in the region of a surface facing the first primary structure component preferably is provided with a first teeth plate which is adapted to interact with a complementary second teeth plate provided in the region of a surface of the first primary structure component which faces the arm in order to prevent a displacement of the first connecting portion and the first primary structure component relative to each other in the direction along the longitudinal axis of the installation rail arrangement. Due to the interaction of the first and the second teeth plate the first primary structure component and the associated first connecting portion can be securely fixed to each other in the direction along the longitudinal axis of the installation rate arrangement so as to define a fixed bearing even in case the portion of the first bore that extends through the first primary structure component is designed in the form of an elongated hole in order to compensate for positional tolerances of the first primary structure component.

A second primary structure component and an associated second connecting portion which define a floating bearing may be connected to each other by means of a second fastening bolt which is received in a corresponding second bore extending through the second primary structure component and the associated second connecting portion in a direction substantially perpendicular to the longitudinal axis of the installation rail arrangement. The second fastening bolt and a first portion of the second bore that extends through the second connecting element preferably are shaped and dimensioned so as to allow the second fastening bolt to be received in the first portion of the bore in a form-fit manner. The second fastening bolt and a second portion of the second bore that extends through the second primary structure component preferably are shaped and dimensioned so as to allow a displacement of the second fastening bolt in the second portion of second bore in the direction along the longitudinal axis of the installation rail arrangement.

For example, the second fastening bolt and the first portion of the second bore may have corresponding for example circular cross-sectional shapes. The second portion of the second bore, however, may be designed as an elongated hole with a longitudinal axis extending parallel to the longitudinal axis of the installation rail arrangement. The second fastening bolt then may be displaced within the second portion of the second bore, thus allowing a relative displacement between the second primary structure component and the associated second connecting portion and hence the installation rail in the direction along the longitudinal axis of the installation rail arrangement.

At least one of the plurality of load transmission elements comprises a bolt-shaped part extending in a direction substantially parallel to the longitudinal axis of the installation rail arrangement and having a circumferential outer surface. The circumferential outer surface includes alternately on a circumferential path in a cross-sectional plane of the bolt-shaped part at least one ridged section and at least one plain section. Each ridged section may include at least one ridge. The at least one of the plurality of load transmission elements further comprises a stopper portion, wherein the first contact face is formed on the stopper portion and extends in a direction substantially perpendicular to the longitudinal axis of the installation rail arrangement. The second contact face that is adapted to interact with the first contact face is formed on the second primary structure element and extends opposite to the first contact face in a direction substantially perpendicular to the longitudinal axis of the installation rail arrangement.

A second fastening bolt adapted to interact with an above-described load transmission element comprises a tubular part extending in a direction substantially parallel to the longitudinal axis of the installation rail arrangement and having a circumferential inner surface. The circumferential inner surface of the tubular part includes alternately on a circumferential path in a cross-sectional plane of the tubular part at least one ridged section and at least one plain section. Each ridged section includes at least one ridge.

The bolt-shaped part of the load transmission element is configured to be inserted into the tubular part of the second fastening bolt in a state where a cross-sectional projection of the at least one ridged section of the bolt-shaped part coincides with a cross-sectional projection of the at least one plain section of the tubular part until the first and the second contact surface are arranged at a desired distance from each other so as to define the gap. In other words, during insertion of the bolt-shaped part of the load transmission element into the tubular part of the second fastening bolt, the cross-sectional projection of the bolt-shaped part of the load transmission element including the ridged section(s) does not overlap with a cross-sectional projection of the interior opening of the tubular part. This allows to easily insert the bolt-shaped part of the load transmission element into the tubular part of the second fastening bolt and to easily adjust the desired distance between the first and the second contact surface.

Further, the bolt-shaped part of the load transmission element is configured to be rotated relative to the tubular part, thereby engaging respective ridges of the bolt-shaped part and the tubular part, so as secure the load transmission element to the second fastening bolt. Upon inserting the bolt-shaped part of the load transmission element into the tubular part of the second fastening bolt, each ridged section of the bolt-shaped part is located in a corresponding plain section of the tubular part and, hence, next to a ridged section of the tubular part. When performing a rotation of the bolt-shaped part, the ridge(s) of the bolt-shaped part engage(s) with the ridge(s) of the tubular part. When engaged, the ridges of the bolt-shaped part and the tubular part affix the bolt-shaped part and the tubular part to one another and, hence, affix the gap between the first and the second contact surface.

At least one of the plurality of load transmission elements of the installation rail arrangement may also comprise a bolt-shaped part extending in a direction substantially parallel to the longitudinal axis of the installation rail arrangement and having a circumferential outer surface. The circumferential outer surface may include in a longitudinal direction of the bolt-shaped part two areas, each including alternately on a circumferential path in a cross-sectional plane of the bolt-shaped part at least one ridged section and at least one plain section. Each ridged section may include at least one ridge. The at least one ridge in a first of the two areas preferably has a positive pitch value and the at least one ridge in a second of the two areas preferably has a negative pitch value.

The at least one of the plurality of load transmission elements preferably further comprises a female fastener being received in a receiving opening provided in the second primary structure component so as to be displaceable relative to the second primary structure component in the direction along the longitudinal axis of the installation rail arrangement and comprising a tubular part. The tubular part may extend in a direction substantially parallel to the longitudinal axis of the installation rail arrangement and may have a circumferential inner surface. The circumferential inner surface may include alternately on a circumferential path in a cross-sectional plane of the tubular part of the female fastener at least one ridged section and at least one plain section. Each ridged section preferably includes at least one ridge having a negative pitch value.

The first contact face of an above-described load transmission element may be formed by a portion of an outer surface of the female fastener. The second contact face that is adapted to interact with the first contact face may be formed by a portion of an inner surface of the receiving opening provided in the second primary structure element. The second contact face preferably extends opposite to the first contact face.

A second fastening bolt adapted to interact with an above-described load transmission element preferably comprises a tubular part extending in a direction substantially parallel to the longitudinal axis of the installation rail arrangement and having a circumferential inner surface. The circumferential inner surface may include alternately on a circumferential path in a cross-sectional plane of the tubular part at least one ridged section and at least one plain section. Each ridged section preferably includes at least one ridge having a positive pitch value.

The bolt-shaped part of the load transmission element may be configured to be inserted into the female fastener and the tubular part of the second fastening bolt in a state where a cross-sectional projection of the at least one ridged section of the bolt-shaped part coincides with a cross-sectional projection of the at least one plain section of the tubular part and with a cross-sectional projection of the at least one plain section of the female fastener until the first and the second contact surface are arranged at a desired distance from each other so as to define the gap. In other words, during insertion of the bolt-shaped part of the load transmission element into the female fastener and into the tubular part of the second fastening bolt, the cross-sectional projection of the bolt-shaped part of the load transmission element including the ridged section(s) does not overlap with a cross-sectional projection of the interior opening of the tubular parts of the female fastener and the second fastening bolt. This allows to easily insert the bolt-shaped part of the load transmission element into the tubular parts of the female fastener and the second fastening bolt and to easily adjust the desired distance between the first and the second contact surface.

The bolt-shaped part preferably is configured to be rotated relative to the tubular part and the female fastener, thereby engaging respective ridges of the first area of the bolt-shaped part and the tubular part and engaging respective ridges of the second area of the bolt-shaped part and the female fastener, so as secure the load transmission element to the second fastening bolt. Hence, the load transmission element can be secured in its position relative to the second fastening bolt and simultaneously, the gap between the first and the second contact surface can be affixed.

At least one of the plurality of load transmission elements of the installation rail arrangement may also comprise a fastening portion which is rigidly connected, in particular glued, to a second primary structure component which, together with an associated second connecting portion, defines a floating bearing. The fastening portion of the load transmission element may extend in a direction substantially parallel to the longitudinal axis of the installation rail arrangement. Further, the load transmission element may comprise a stopper portion. The first contact face may be formed on the stopper portion and extend in a direction substantially perpendicular to the longitudinal axis of the installation rail arrangement.

A second contact face that is adapted to interact with the first contact face formed on the stopper portion of the above-described load transmission element may be formed on an abutting element of the installation rail and may extend opposite to the first contact face in a direction substantially perpendicular to the longitudinal axis of the installation rail arrangement.

In a preferred embodiment of the installation rail arrangement the carrier portion of the installation rail is provided with a plurality of openings arranged one behind another in the direction along the longitudinal axis of the installation rail arrangement. Each of the openings may be adapted to receive a fastener for attaching an equipment component to the installation rail. For example, the equipment component may be designed in the form of a galley rod or a reinforcement element.

A free edge of the installation rail may have a scalloped shape. The installation rail then may be particularly lightweight.

An installation rail system comprises a first installation rail arrangement that is designed as described above and a second installation rail arrangement that is also designed as described above. The first and the second installation rail arrangement are arranged relative to each other in such a manner that, in the first operational state of the first and the second installation rail arrangement, a gap is present between opposing end faces of the installation rail of the first installation rail arrangement and the installation rail of the second installation rail arrangement, in a direction along a longitudinal axis of the installation rail system, and that, in the second operational state of the first and the second installation rail arrangement, the opposing end faces of the installation rail of the first installation rail arrangement and the installation rail of the second installation rail arrangement contact each other. Hence, in the second operational state of the first and the second installation rail arrangement, the installation rails of the installation rail arrangements abut against each other and hence are suitable to transmit loads acting in the direction along the longitudinal axis of the installation rail system. As a result, loads acting in the direction along the longitudinal axis of the installation rail system can be distributed to the primary structure components, thus enhancing the load bearing and load transmission capabilities of the installation rail system.

In a preferred embodiment of the installation rail system, the gap which is present between opposing end faces of the installation rail of the first installation rail arrangement and the installation rail of the second installation rail arrangement in the first operational state of the first and the second installation rail arrangement is dimensioned in such a manner that the gap is eliminated due to a thermally induced repositioning of the primary structure components of the first and the second installation rail arrangement upon changing the operational state of the first and the second installation rail arrangement from the first operational state to the second operational state.

Preferred embodiments of an installation rail arrangement and an installation rail system are described in greater detail with reference to the attached schematic drawings in the following, wherein
- Figures 1a and b: show an overview of an installation rail arrangement in a first operational state (figure 1a) and a second operational state (figure 1b),
- Figures 2a and b: show a fixed bearing suitable for use in the installation rail arrangement according to figures 1a and b,
- Figures 3 to 5: show an alternative fixed bearingsuitable for use in the installation rail arrangement according to figures 1a and b,
- Figure 6: shows a load transmission element suitable for use in the installation rail arrangement according to figures 1a and b,
- Figures 7 to 9: illustrate the installation of the load transmission element depicted in figure 6,
- Figure 10: shows an alternative load transmission element suitable for use in the installation rail arrangement according to figures 1a and b,
- Figure 11 to 13: illustrate the installation of the load transmission element depicted in figure 10,
- Figure 14: shows an a further alternative load transmission element suitable for use in the installation rail arrangement according to figures 1a and b,
- Figure 15: shows a first equipment component attached to an installation rail of the installation rail arrangement according to figures 1a and b,
- Figure 16: shows a first equipment component attached to an installation rail of the installation rail arrangement according to figures 1a and b,
- Figures 17 and 18: show an installation rail system comprising a first and a second installation rail arrangement according to figures 1a and b.

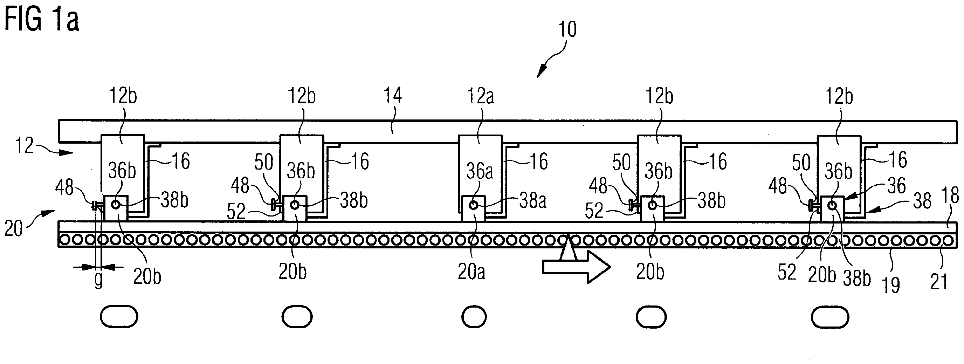

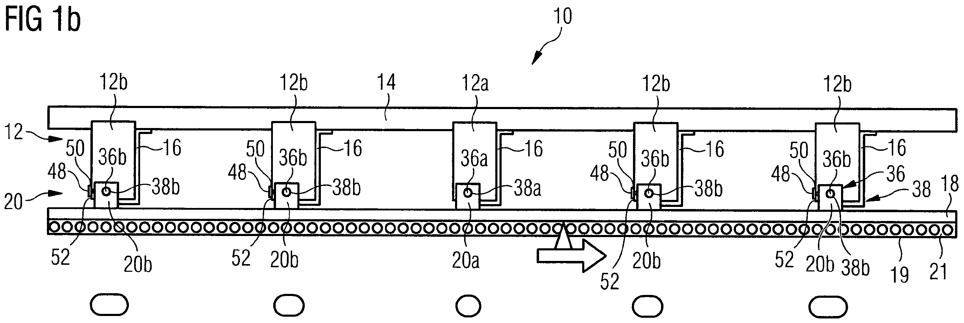

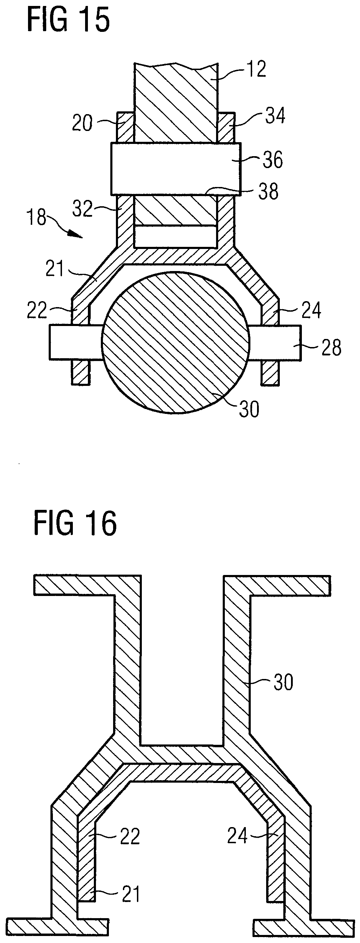

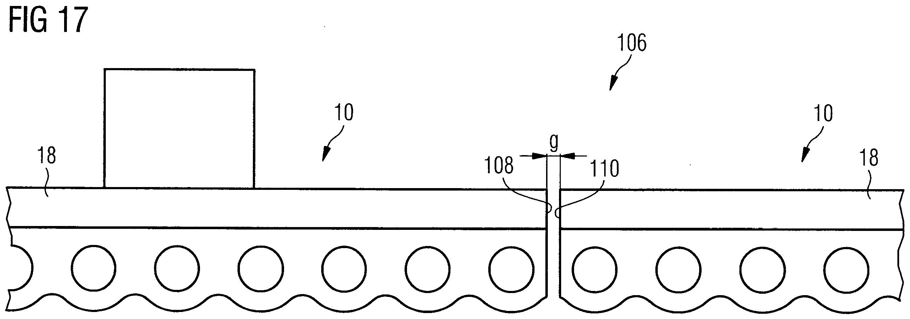

Figures 1a and b shows an installation rail arrangement 10 which is suitable for being mounted in an aircraft. The installation rail arrangement 10 comprises a plurality of primary structure components 12 arranged one behind another in a direction along a longitudinal axis L of the installation rail arrangement 10. In the embodiment of an installation rail arrangement 10 depicted in the drawings, the primary structure components 12 are designed in the form of fastening cleats that protrude from a stringer 14 and serve to attach a frame 16 to the stringer 14. Further, the installation rail arrangement 10 comprises an installation rail 18 which serves to attach at least one equipment component 30 (see figures 15 and 16) to the primary structure components 12. A free edge 19 of the installation rail 18 may be smooth as shown in figures 1a and 1b. Alternatively, the free edge 19 of the installation rail 18, however, may also have a scalloped shape as depicted in figure 17. The installation rail 18 then may be particularly lightweight.

The installation rail 18 comprises a plurality of connecting portions 20 which, like the primary structure components 12, are arranged one behind another in a direction along a longitudinal axis L of the installation rail arrangement 10. Each connecting portion 21 is connected to an associated primary structure component 12 in order to fasten the installation rail 18 to the plurality of primary structure components 12. A carrier portion 21 of the installation rail 18 extends from the plurality of connecting portions 20 in the direction along the longitudinal axis L of the installation rail arrangement 10. The carrier portion 21 is adapted to carry at least one equipment component.

As shown in figures 15 and 16, the carrier portion 21 of the installation rail 18 comprises two arms 22, 24 extending parallel to each other in the direction along the longitudinal axis L of the installation rail arrangement 10. A plurality of openings 26 arranged one behind another in the direction along the longitudinal axis L of the installation rail arrangement 10 is formed in the carrier portion 21 of the installation rail 18, i.e. the arms 22, 24 of the carrier portion 21, wherein associated openings 26 formed in the arms 22, 24 of the carrier portion 21 are aligned with each other. Each of the openings 26 or pairs of openings 26 is adapted to receive a fastener 28 for attaching an equipment component to the carrier portion 21 of the installation rail 18. In the arrangement of figure 15, the fastener 28 is designed in the form of a bolt which is guided through associated aligned openings 26 formed in the arms 22, 24 of the installation rail 18 in order to attach an equipment component 30 in the form of a galley rod to the installation rail 18. In the arrangement of figure 16, the equipment component attached to the installation rail 18 is designed in the form of a reinforcement element providing for a local reinforcement of the installation rail 18.

As also shown in figures 15 and 16, the connecting portions 20 of the installation rail 18 each have a substantially U-shaped cross-section with two arms 32, 34 that extend in in the direction along the longitudinal axis L of the installation rail arrangement 10 at a distance from each other so as to receive an associated primary structure component 12 therebetween. A fastening bolt 36 which is received in a bore 38 extending through the primary structure component 12 and the associated connecting portion 20 in a direction substantially perpendicular to the longitudinal axis L of the installation rail arrangement 10 connects the connecting portion 20 of the installation rail 18 to the associated primary structure component 12.

A selected pair of a first primary structure component 12a and an associated first connecting portion 20a of the installation rail arrangement 10 defines a fixed bearing that is adapted to connect the first primary structure component 12a and the associated first connecting portion 20a so as to be non-displaceable relative to each other in the direction along the longitudinal axis L of the installation rail arrangement 10. As becomes apparent from figures 1a and b, the selected pair of the first primary structure component 12a and the associated first connecting portion 20a, in the direction along the longitudinal axis L of the installation rail arrangement 10, is arranged in a central position of the installation rail arrangement 10.

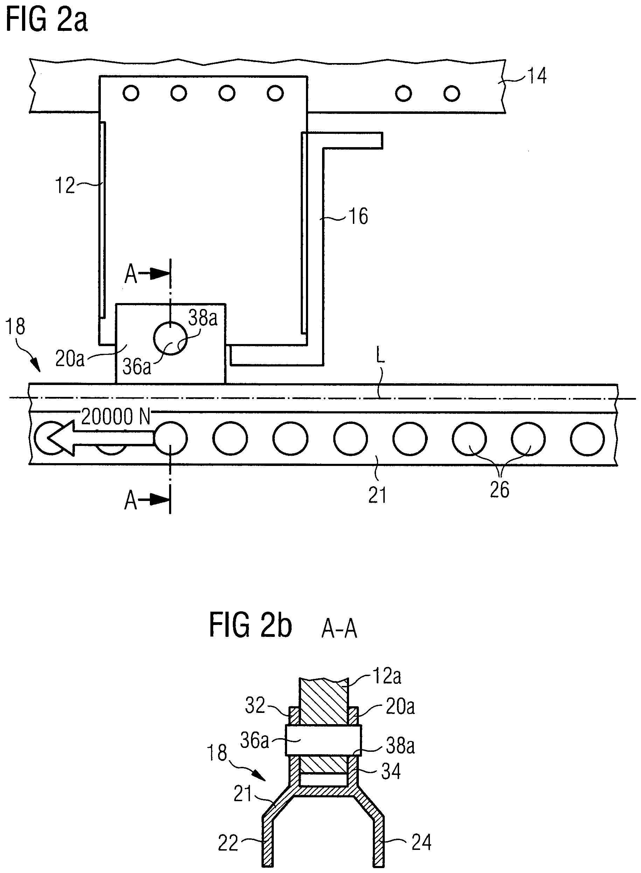

The configuration of the fixed bearing defined by the first primary structure component 12a and the associated first connecting portion 20a is depicted in greater detail in figures 2a and b. The first primary structure component 12a and the associated first connecting portion 20a are connected to each other by means of a first fastening bolt 36a. The first fastening bolt 36a is received in a corresponding first bore 38a extending through the first primary structure component 12a and the associated first connecting portion 20a in a direction substantially perpendicular to the longitudinal axis L of the installation rail arrangement 10. In particular, the first bore 38a extends through the arms 32, 34 of the first connecting portion 20a and a region of the first primary structure component 12a received between said arms 32, 34. In the arrangement depicted in figures 2a and b, the first fastening bolt 36a and the first bore 38a are shaped and dimensioned so as to allow the first fastening bolt 36a to be received in the first bore 38a in a form-fit manner. In particular, the first fastening bolt 36a and the first bore 38a have corresponding circular cross-sectional shapes.

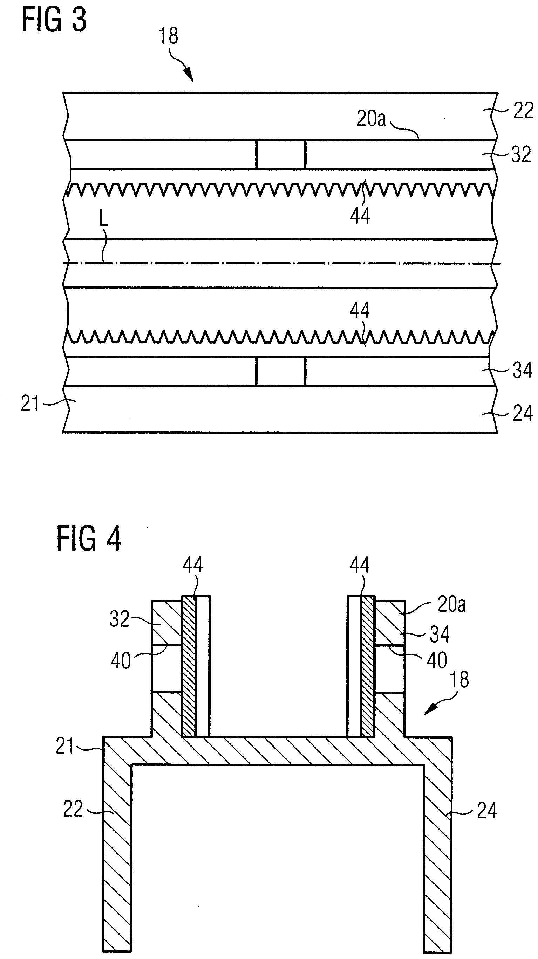

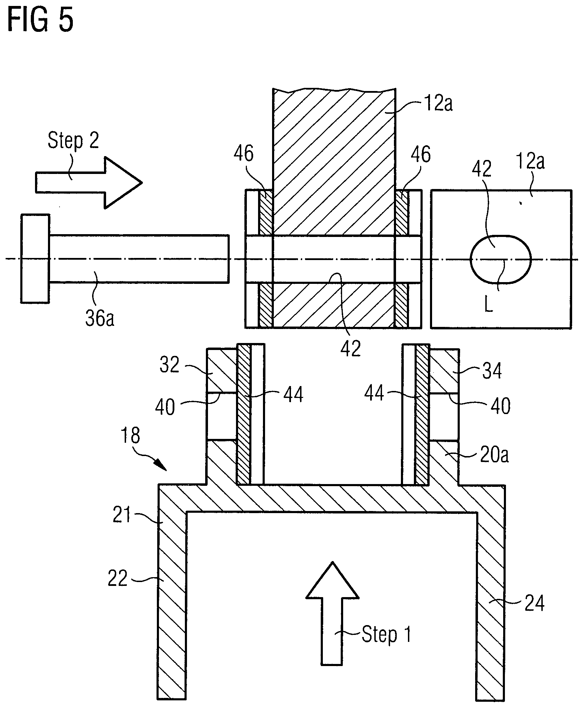

Alternatively, in the fixed bearing arrangement according to figures 3 to 5, a form-fit is provided only between the first fastening bolt 36a and a first portion 40 of the first bore 38a that extends through the first connecting portion 20a. A second portion 42 of the first bore 38a that extends through the first primary structure component 12a, however, is designed as an elongated hole with a longitudinal axis L_{H1} extending parallel to the longitudinal axis L of the installation rail arrangement 10. The first fastening bolt 36a then can easily be introduced into the second portion 42 of the first bore 38a even in case the first primary structure component 12a and the associated first connecting portion 20a are not perfectly aligned, for example due to a positional tolerance of the first primary structure component 12a.

In order to prevent a displacement of the first connecting portion 20a and the first primary structure component 12a relative to each other in the direction along the longitudinal axis L of the installation rail arrangement 10, in the fixed bearing arrangement shown in figures 3 to 5, each arm 32, 34 of the first connecting portion 20a, in the region of a surface facing the first primary structure component 12a is provided with a first teeth plate 44 which is adapted to interact with a complementary second teeth plate 46 provided in the region of a surface of the first primary structure component 12a which faces the arm 32, 34. Due to the interaction of the first and the second teeth plate 44, 46 the first primary structure component 12a and the associated first connecting portion 20a are securely fixed to each other in the direction along the longitudinal axis L of the installation rate arrangement 10.

At least one pair of a second primary structure component 12b and an associated second connecting portion 20b of the installation rail arrangement 10 is configured to define a floating bearing adapted to connect the second primary structure component 12b and the associated second connecting portion 20b so as to allow a relative displacement between the second primary structure component 12b and the associated second connecting portion 20b in the direction along the longitudinal axis L of the installation rail arrangement 10. In the configuration shown in figures 1a and b, the installation rail arrangement 10 is provided with four pairs of a second primary structure component 12b and an associated second connecting portion 20b that define a floating bearing. Each floating bearing allows a displacement of the second primary structure component 12b relative to the first primary structure component 12a and also relative to the associated second connecting portion 20b and hence the entire installation rail 18 and thus prevents the development of stresses resulting from such a displacement in both the primary structure components 12 and the installation rail 18.

In the installation rail arrangement 10 depicted in figures 1a and b, the design of the floating bearings defined by a respective pair of a second primary structure component 12b and an associated second connecting portion 20a of the installation rail arrangement 10 varies in dependence on a distance of the second primary structure component 12b from the first primary structure component 12a. In particular, the floating bearings are designed so as to be able to compensate for a larger relative displacement between the second primary structure component 12b and the associated second connecting portion 20b in the direction along the longitudinal axis L of the installation rail arrangement 10 the farther away the floating bearing is arranged from the fixed bearing defined by the first primary structure component 12a and the associated first connecting portion 20a.

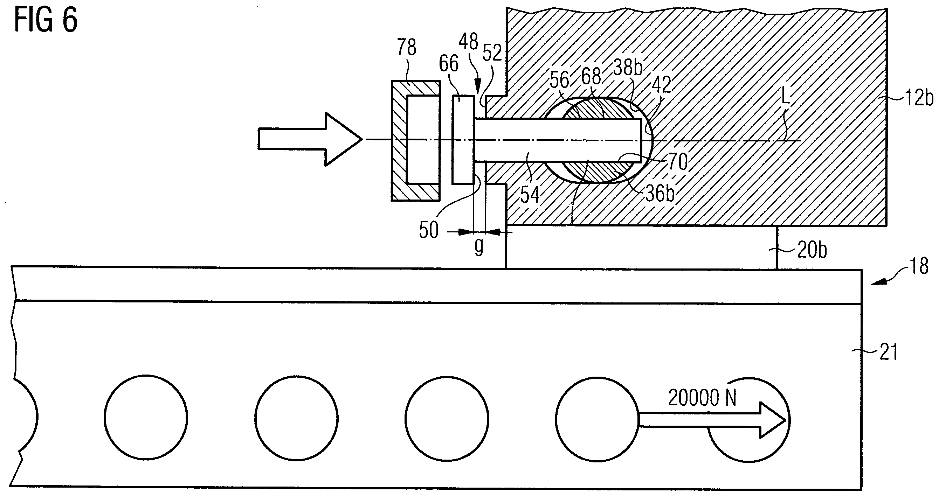

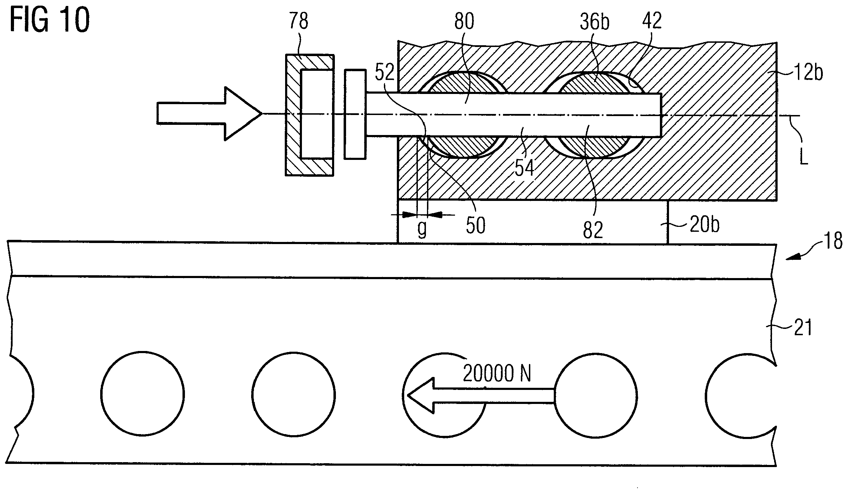

As becomes apparent from figures 6 and 10, a second primary structure component 12b and an associated second connecting portion 20b which define a floating bearing are connected to each other by means of a second fastening bolt 36b which is received in a corresponding second bore 38b extending through the second primary structure component 12b and the associated second connecting portion 20b in a direction substantially perpendicular to the longitudinal axis L of the installation rail arrangement 10. The second fastening bolt 36b and a first portion 40 of the second bore 38b that extends through the second connecting element 20b are shaped and dimensioned so as to allow the second fastening bolt 36a to be received in the first portion 40 of the second bore 38b in a form-fit manner. The second fastening bolt 36b and a second portion 42 of the second bore 38b that extends through the second primary structure component 12b, however, are shaped and dimensioned so as to allow a displacement of the second fastening bolt 36b in the second portion 42 of second bore 38b in the direction along the longitudinal axis L of the installation rail arrangement 10.

In particular, the second fastening bolt 36b and the first portion 40 of the second bore 38b have corresponding circular cross-sectional shapes. The second portion 42 of the second bore 38b, however, is designed as an elongated hole with a longitudinal axis L_{H2} extending parallel to the longitudinal axis L of the installation rail arrangement 10. As a result, the second fastening bolt 36b can be displaced within the second portion 42 of the second bore 38b , thus allowing a relative displacement between the second primary structure component 12b and the associated second connecting portion 20b and hence the installation rail 18 in the direction along the longitudinal axis L of the installation rail arrangement 10.

The installation rail arrangement 10 further comprises a plurality of load transmission elements 48. Each load transmission element 48 is rigidly connected to one of the installation rail 18 and a second primary structure component 12b which, together with an associated second connecting portion 20b, defines a floating bearing. In the arrangement depicted in figures 1a and b, each load transmission element 48 is rigidly connected to the installation rail 18 via the second fastening bolt 36b that is received in the first portion 40 of the second bore 38b in a non-displaceable manner.

Each load transmission element 48 comprises a first contact face 50 adapted to interact with a complementary second contact face 52 provided on the other one of the installation rail 18 and the second primary structure component 12b, in order to transfer loads acting in the direction along the longitudinal axis L of the installation rail arrangement 10 from the installation rail 18 to the second primary structure component 12b. In the arrangement according to figures 1a and b, each second primary structure component 12b is provided with a second contact face 52 suitable for interaction with a first contact face 50 provided on an associated load transmission element 48.

In a first operational state of the installation rail arrangement 10 depicted in figure 1a, a gap g is present between each pair of a first and a second contact face 50, 52, in the direction along the longitudinal axis L of the installation rail arrangement 10. To the contrary, in a second operational state of the installation rail arrangement 10 depicted in figure 1b, each pair of a first and a second contact face 50, 52 contacts each other. The interaction between the first and the second contact face 50, 52, in particular in the second operational state of the installation rail arrangement 10, ensures an optimum transmission of loads acting in the direction along the longitudinal axis L of the installation rail arrangement from the installation rail 18 to the primary structure components 12b.

In particular, the gap g which is present between each first and second contact face 50, 52 in the first operational state of the installation rail arrangement 10 is dimensioned in such a manner that the gap g is eliminated due to a thermally induced repositioning of the primary structure components 12 upon changing the operational state of the installation rail arrangement 10 from the first operational state to the second operational state. The first operational state of the installation rail arrangement 10 is a ground operational state, i.e. a state wherein an aircraft equipped with the installation rail arrangement 10 is operated on the ground. The second operational state of the installation rail arrangement 10 is a flight operational state, e. a state wherein an aircraft equipped with the installation rail arrangement 10 is operated in flight.

In the ground operational state of the installation rail arrangement 10 only a limited temperature difference exists between an aircraft environment and an interior of the aircraft. Hence the second primary structure components 12b are arranged at first distances from the first primary structure component 12a which allows the gaps g to be present between the first and the second contact faces 50, 52. To the contrary, in a flight operational state of the installation rail arrangement 10, a significant temperature difference exists between an aircraft environment and the interior of the aircraft. Hence the second primary structure components 12b are arranged at second distances from the first primary structure component 12a which are smaller than the first distances between the second primary structure components 12b and the first primary structure component 12a in the first operational state. Thus, since the gap g, i.e. the distance between the first and the second contact faces 50, 52 in the first operational state of the installation rail arrangement 10 is adjusted to the thermally induced repositioning, the primary structure components 12 experience upon changing the operational state of the installation rail arrangement 10 from a ground operational state to a flight operational state, the gap g between the first and the second contact faces 50, 52 is closed and, in the flight operational state of the installation rail arrangement 10, the first and the second contact faces 50, 52 contact each other.

In the configuration shown in figures 6 to 9, the load transmission element 48 comprises a bolt-shaped part 54 extending in a direction substantially parallel to the longitudinal axis L of the installation rail arrangement 10 and having a circumferential outer surface 56. The circumferential outer surface 56 includes alternately on a circumferential path in a cross-sectional plane of the bolt-shaped part 54 two ridged sections 60 and two plain sections 62. Each ridged section 16 includes a plurality of ridges 64. The load transmission elements 48 further comprises a stopper portion 66. The first contact face 50 is formed on the stopper portion 66 and extends in a direction substantially perpendicular to the longitudinal axis L of the installation rail arrangement 10. The second contact face 52 that is adapted to interact with the first contact face 50 is formed on the second primary structure element 12b and extends opposite to the first contact face 50 in a direction substantially perpendicular to the longitudinal axis L of the installation rail arrangement 10.

In order to be able to interact with the load transmission element 48, the second fastening bolt 36b, in the arrangements according to figure 6 to 9, comprises a tubular part 68 extending in a direction substantially parallel to the longitudinal axis L of the installation rail arrangement 10 and having a circumferential inner surface 70. The circumferential inner surface 70 of the tubular part 68 includes alternately on a circumferential path in a cross-sectional plane of the tubular part 68 two ridged sections 72 and two plain sections 74. Each ridged section includes a plurality of ridges 76.

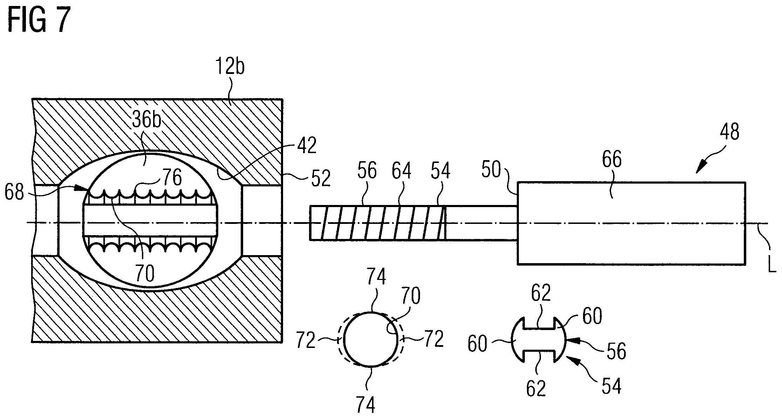

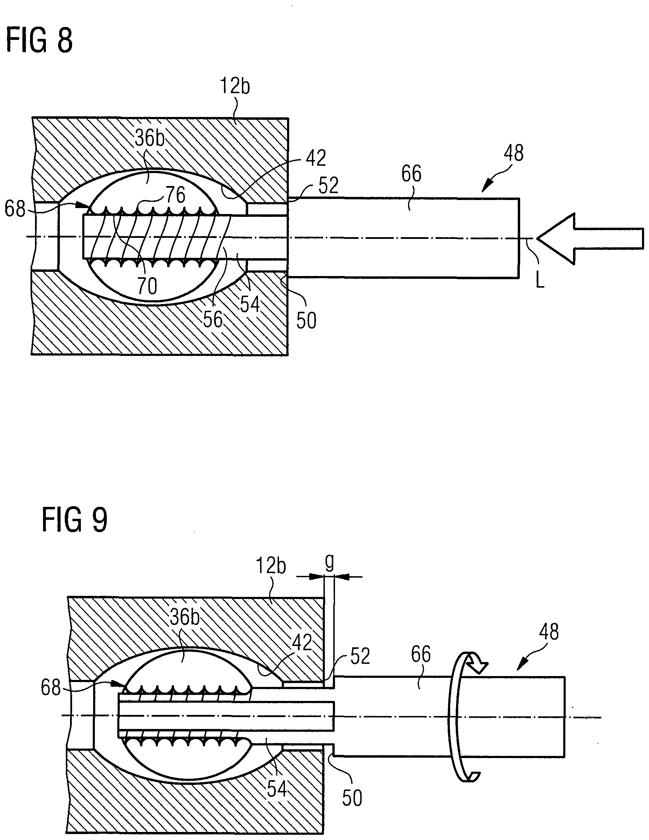

As shown in figures 7 and 8, the bolt-shaped part 54 of the load transmission element 48 is configured to be inserted into the tubular part 68 of the second fastening bolt 36b in a state where a cross-sectional projection of the ridged sections 60 of the bolt-shaped part 54 coincide with a cross-sectional projection of the plain sections of the tubular part 68 until the first and the second contact surface 50, 52 are arranged at a desired distance from each other so as to define the gap g. During insertion of the bolt-shaped part 54 of the load transmission element 48 into the tubular part 68 of the second fastening bolt 36b, the cross-sectional projection of the bolt-shaped part 54 of the load transmission element 48 including the ridged sections 60 does not overlap with a cross-sectional projection of the interior opening of the tubular part 68. Consequently, upon inserting the bolt-shaped part 54 of the load transmission element 48 into the tubular part 68 of the second fastening bolt 36b, the desired distance between the first and the second contact surface 50, 52, i.e. the gap g can easily be adjusted as desired.

Further, as shown in figure 9, the bolt-shaped part 54 of the load transmission element 48 is configured to be rotated relative to the tubular part 68, thereby engaging respective ridges 64, 76 of the bolt-shaped part 54 and the tubular part 68, so as to secure the load transmission element 48 to the second fastening bolt 36b. Upon inserting the bolt-shaped part 54 of the load transmission element 48 into the tubular part 68 of the second fastening bolt 36b, each ridged section 60 of the bolt-shaped part 54 is located in a corresponding plain section 74 of the tubular part 68 and, hence, next to a ridged section 72 of the tubular part 68. When performing a rotation of the bolt-shaped part 54, the ridges 64 of the bolt-shaped part 54 engage with the ridges 76 of the tubular part 68. When engaged, the ridges 64, 76 of the bolt-shaped part 54 and the tubular part 68 affix the bolt-shaped part 54 and the tubular part 68 to one another and, hence, affix the gap g between the first and the second contact surface 50, 52. Finally, a locking element 78 which is adapted to lock the load transmission element 48 against rotation relative to the second fastening bolt 36b is attached, see figure 6.

In the arrangement shown in figures 7 to 9, the bolt-shaped part 54 of the load transmission element 48, in a first step, is inserted into the tubular part 68 of the second fastening bolt 36b until the first contact surface 50 abuts against the second contact surface. Thereafter, upon rotating the bolt-shaped part 54 relative to the tubular part 68 in a second step, the first contact surface 50 again is moved away from the second contact surface 52, so as to adjust the gap g as desired. It is, however, also conceivable to provide the bolt-shaped part 54 and the tubular part 68 with ridges 64, 76 which are not have a pitch. The bolt-shaped part 54 of the load transmission element 48, in a first step, then is inserted into the tubular part 68 of the second fastening bolt 36b until the first contact surface 50 is arranged at a desired distance from the second contact surface 52 which defines the gap g.

Thereafter, by rotating the bolt-shaped part 54 relative to the tubular part 68 in a second step the bolt-shaped part 54 and the tubular part 68 are affixed relative to each other while maintaining the distance between the first and the second contact surface 50, 52.

In an alternative embodiment, which is shown in figures 10 to 13, the load transmission element 48 comprises a bolt-shaped part 54 extending in a direction substantially parallel to the longitudinal axis L of the installation rail arrangement 10 and having a circumferential outer surface 56. The circumferential outer surface 56 includes in a longitudinal direction of the bolt-shaped part 54 two areas 80, 82, each including alternately on a circumferential path in a cross-sectional plane of the bolt-shaped part two ridged sections 60 and two plain sections 62. Each ridged section 60 comprises a plurality of ridges 64. The ridges 64 in a first of the two areas 80, 82 have a positive pitch value and the ridges 64 in a second of the two areas 82, 82 have a negative pitch value.

The load transmission element 48 further comprises a female fastener 84 being received in a receiving opening 86 provided in the second primary structure component 12b so as to be displaceable relative to the second primary structure component 12b in the direction along the longitudinal axis L of the installation rail arrangement 10 and comprising a tubular part 88. The tubular part tubular part 88 extends in a direction substantially parallel to the longitudinal axis L of the installation rail arrangement and has a circumferential inner surface 90. The circumferential inner surface 90 includes alternately on a circumferential path in a cross-sectional plane of the tubular part 88 of the female fastener 84 two ridged sections 92 and two plain section 94. Each ridged section 92 includes a plurality of ridges 96 having a negative pitch value.

The first contact face 50 of the load transmission element 48 is formed by a portion of an outer surface of the female fastener 84. The second contact face 52 that is adapted to interact with the first contact face 50 is formed by a portion of an inner surface of the receiving opening 86 provided in the second primary structure element 12b. The second contact face 52 extends opposite to the first contact face 50.

A second fastening bolt 36b which is adapted to interact with the load transmission element 48 depicted in figures 10 to 13 comprises a tubular part 68 extending in a direction substantially parallel to the longitudinal axis L of the installation rail arrangement 10 and having a circumferential inner surface 70. The circumferential inner surface 70 includes alternately on a circumferential path in a cross-sectional plane of the tubular part 68 two ridged sections 72 and two plain sections 74. Each ridged section 72 includes a plurality of ridges 76 having a positive pitch value.

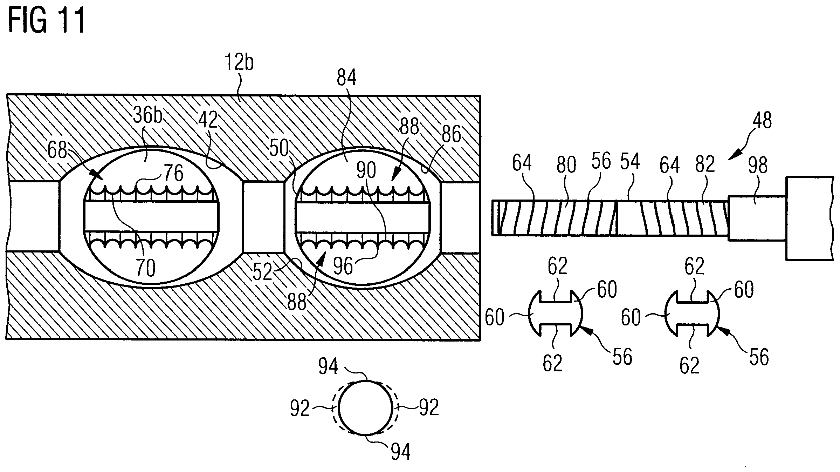

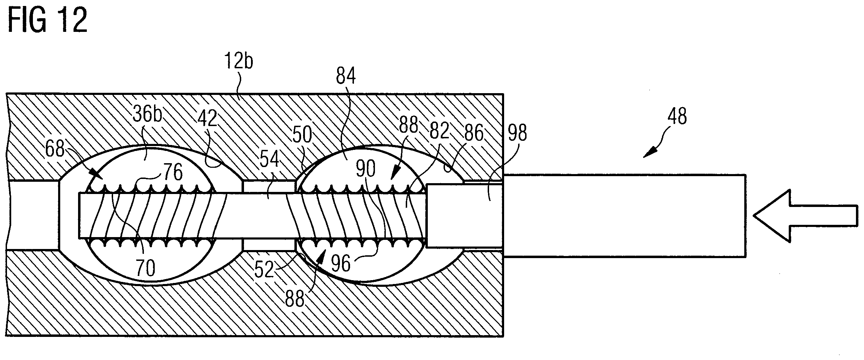

As shown in figures 11 and 12, the bolt-shaped part 54 of the load transmission element 48 is configured to be inserted into the female fastener 84 and the tubular part 68 of the second fastening bolt 36b in a state where a cross-sectional projection of the ridged sections of the bolt-shaped part 54 coincide with a cross-sectional projection of the plain sections 62 of the tubular part 68 and with a cross-sectional projection of the plain sections 94 of the female fastener 84 until the first and the second contact surface 50, 52 are arranged at a desired distance from each other so as to define the gap g. In other words, during insertion of the bolt-shaped part 54 of the load transmission element 48 into the female fastener 84 and into the tubular 68 part of the second fastening bolt 36b, the cross-sectional projection of the bolt-shaped part 54 of the load transmission element 48 including the ridged sections 60 does not overlap with a cross-sectional projection of the interior opening of the tubular parts 88, 68 of the female fastener 84 and the second fastening bolt 36b.

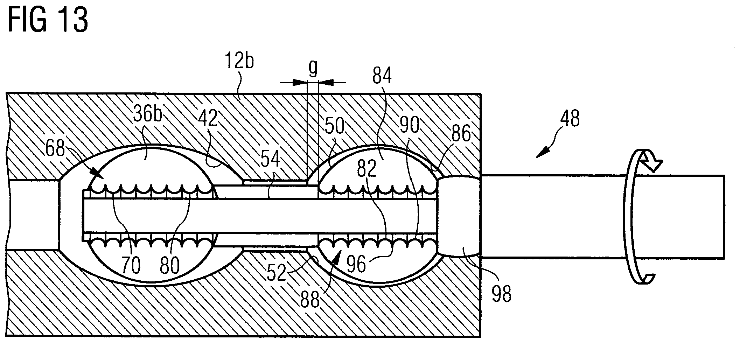

As shown in figure 12, the bolt-shaped part 54 of the load transmission element 48, in a first step, is inserted into the female fastener 84 and the tubular part 68 of the second fastening bolt 36b until the first contact surface 50 abuts against the second contact surface 52. In a second step shown in figure 13, the bolt-shaped part 54 is rotated relative to the tubular part 68 and the female fastener 84, thereby engaging respective ridges 60 of the first area 80 of the bolt-shaped part 54 and the tubular part 68 and engaging respective ridges 60 of the second area 82 of the bolt-shaped part 54 and the female fastener 84, so as secure the load transmission element 48 to the second fastening bolt 36b. Upon rotating the bolt-shaped part 54 relative to the tubular part 68 of the second fastening bolt 36b and the female fastener 84, a rubber element 98 provided on the bolt-shaped part 54 is compressed by the female fastener 84. Thus, like in the arrangement according to figures 6 to 9, the first contact surface 50 again is moved away from the second contact surface 52, so as to adjust the gap g as desired.

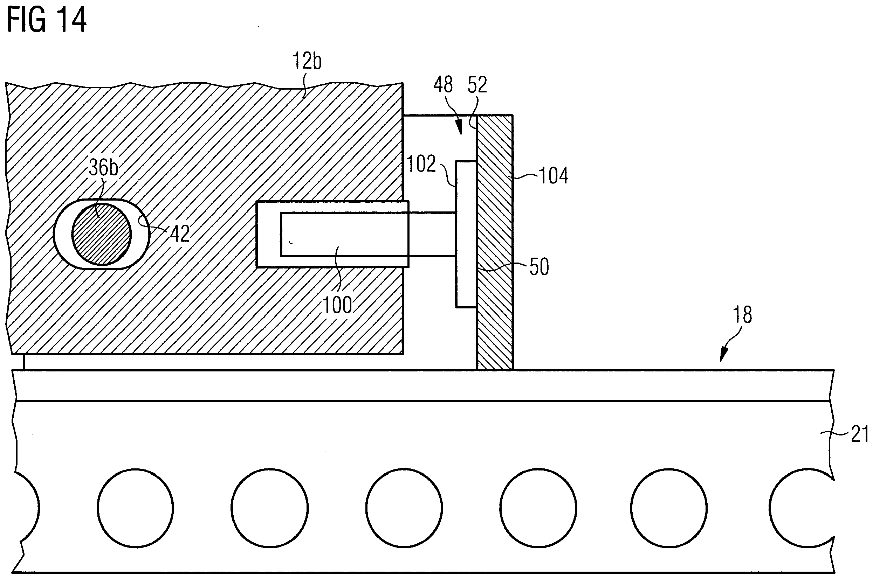

A further alternative embodiment of a load transmission element 48 is shown in in figure 14. This load transmission element 48 of comprises a fastening portion 100 which is rigidly connected, in particular glued, to a second primary structure component 12b which, together with an associated second connecting portion 20b, defines a floating bearing. The fastening portion 100 of the load transmission element 48 extends in a direction substantially parallel to the longitudinal axis L of the installation rail arrangement 10. Further, the load transmission element 48 comprises a stopper portion 102. The first contact face 50 is formed on the stopper portion 102 and extends in a direction substantially perpendicular to the longitudinal axis L of the installation rail arrangement 10.

A second contact face 52 that is adapted to interact with the first contact face 50 formed on the stopper portion 102 of the load transmission element 48 is formed on an abutting element 104 of the installation rail 18 and may extend opposite to the first contact face 50 in a direction substantially perpendicular to the longitudinal axis L of the installation rail arrangement 10. In figure 14, the first and the second contact face 50, 52 are in contact with each other. Figure 4 thus shows the installation rail arrangement 10 in its second operational state. In the first operational state of the installation rail arrangement 10, however, a gap g is present between the first and the second contact face 50, 52, like in the other embodiments of a load transmission elements 48.

Figure 17 shows an installation rail system 106 which comprises a first installation rail arrangement 10 and an identical second installation rail arrangement 10. The first and the second installation rail arrangement 10 are arranged relative to each other in such a manner that, in the first operational state of the first and the second installation rail arrangement 10, a gap G is present between opposing end faces 108, 110 of the installation rail 18 of the first installation rail arrangement 10 and the installation rail 18 of the second installation rail arrangement 10, in a direction along a longitudinal axis L of the installation rail system 106. In addition, the first and the second installation rail arrangement 10 are arranged relative to each other in such a manner that, in the second operational state of the first and the second installation rail arrangement 10, the opposing end faces 108, 110 of the installation rail 18 of the first installation rail arrangement 10 and the installation rail 18 of the second installation rail arrangement 10 contact each other. Hence, in the second operational state of the first and the second installation rail arrangement 10, the installation rails 18 of the installation rail arrangements 10 transmit loads acting in the direction along the longitudinal axisL of the installation rail system 106.

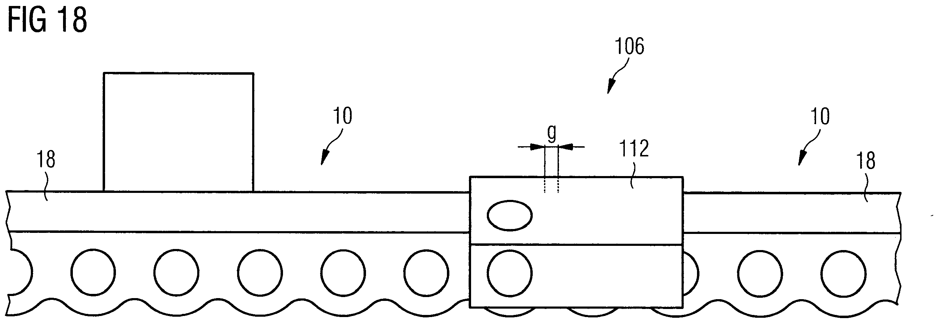

As shown in figure 18, the installation rail system 106 further comprises a cover element 112 which is attached to the carrier portions 21 of the installation rails 18 so as to cover the gap G that is present between opposing end faces 108, 110 of the installation rail 18 of the first installation rail arrangement 10 and the installation rail 18 of the second installation rail arrangement 10 in the first operational state of the first and the second installation rail arrangement 10.

## Claims

1. Aircraft including an installation rail arrangement (10), the installation rail arrangement (10) comprising:
- a plurality of primary structure components (12) arranged in the aircraft one behind another in a direction along a longitudinal axis (L) of the installation rail arrangement (10);
- an installation rail (18) including
-- a plurality of connecting portions (20), each connecting portion (20) being connectable to an associated primary structure component (12) in order to fasten the installation rail (18) to the plurality of primary structure components (12), and
-- a carrier portion (21) extending from the plurality of connecting portions (20) in the direction along the longitudinal axis (L) of the installation rail arrangement (10) and being adapted to carry at least one equipment component (30),
wherein a selected pair of a first primary structure component (12a) and an associated first connecting portion (20a) is configured to define a fixed bearing adapted to connect the first primary structure component (12a) and the associated first connecting portion (20a) so as to be non-displaceable relative to each other in the direction along the longitudinal axis (L) of the installation rail arrangement (10), and
wherein at least one pair of a second primary structure component (12b) and an associated second connecting portion (20b) is configured to define a floating bearing adapted to connect the second primary structure component (12b) and the associated second connecting portion (20b) so as to allow a relative displacement between the second primary structure component (12b) and the associated second connecting portion (20b) in the direction along the longitudinal axis (L) of the installation rail arrangement (10); and
- a plurality of load transmission elements (48), each load transmission element (48) being rigidly connected to one of the installation rail (18) and the second primary structure component (12b) and each load transmission element (48) comprising a first contact face (50) adapted to interact with a complementary second contact face (52) provided on the other one of the installation rail (18) and the second primary structure component (12b), in order to transfer loads acting in the direction along the longitudinal axis (L) of the installation rail arrangement (10) from the installation rail (18) to the second primary structure component (12b), wherein, in a first operational state of the installation rail arrangement (10), a gap (g) is present between the first and the second contact face (50, 52), in the direction along the longitudinal axis (L) of the installation rail arrangement (10), and wherein, in a second operational state of the installation rail arrangement (10), the first and the second contact face (50, 52) contact each other,
wherein the second primary structure component (12b) and an associated second connecting portion (20b) are connected to each other by means of a second fastening bolt (36b) which is received in a corresponding second bore (38b) extending through the second primary structure component (12b) and the associated second connecting portion (20b) in a direction substantially perpendicular to the longitudinal axis (L) of the installation rail arrangement (10), wherein the second fastening bolt (36b) and a first portion (40) of the second bore (38b) that extends through the second connecting element (20b) are shaped and dimensioned so as to allow the second fastening bolt (36b) to be received in the first portion (40) of the second bore (38b) in a form-fit manner, and wherein the second fastening bolt (36b) and a second portion (42) of the second bore (38b) that extends through the second primary structure component (12b) are shaped and dimensioned so as to allow a displacement of the second fastening bolt (36b) in the second portion (42) of second bore (38b) in the direction along the longitudinal axis (L) of the installation rail arrangement (10),
wherein at least one of the plurality of load transmission elements (48) comprises:
- a bolt-shaped part (54) extending in a direction substantially parallel to the longitudinal axis (L) of the installation rail arrangement (10) and having a circumferential outer surface, wherein the circumferential outer surface includes alternately on a circumferential path in a cross-sectional plane of the bolt-shaped part (54) at least one ridged section (60) and at least one plain section (62), wherein each ridged section (60) includes at least one ridge (64), and
- a stopper portion (66),
wherein the first contact face (50) is formed on the stopper portion (66) and extends in a direction substantially perpendicular to the longitudinal axis (L) of the installation rail arrangement (10), and wherein the second contact face (52) that is adapted to interact with the first contact face (50) is formed on the second primary structure element (12b) and extends opposite to the first contact face (50) in a direction substantially perpendicular to the longitudinal axis (L) of the installation rail arrangement (10),
wherein the second fastening bolt (36b) comprises:
- a tubular part (68) extending in a direction substantially parallel to the longitudinal axis (L) of the installation rail arrangement (10) and having a circumferential inner surface, wherein the circumferential inner surface includes alternately on a circumferential path in a cross-sectional plane of the tubular part (68) at least one ridged section (72) and at least one plain section (74), wherein each ridged section (72) includes at least one ridge (76),
wherein the bolt-shaped part (54) of the load transmission element (48) is configured to be inserted into the tubular part (68) of the second fastening bolt (36b) in a state where a cross-sectional projection of the at least one ridged section (60) of the bolt-shaped part (54) coincides with a cross-sectional projection of the at least one plain section (74) of the tubular part (68) until the first and the second contact surface (50, 52) are arranged at a desired distance from each other so as to define the gap (G), and
wherein the bolt-shaped part (54) is configured to be rotated relative to the tubular part (68), thereby engaging respective ridges of the bolt-shaped part (54) and the tubular part, so as secure the load transmission element (48) to the second fastening bolt (36b).

2. The aircraft according to claim 1,
wherein the gap (g) which is present between the first and the second contact face (50, 52) in the first operational state of the installation rail arrangement (10) is dimensioned in such a manner that the gap (g) is eliminated due to a thermally induced repositioning of the primary structure components (12) upon changing the operational state of the installation rail arrangement (10) from the first operational state to the second operational state.

3. The aircraft according to claim 1 or 2,
wherein each of the plurality of connecting portions (20) of the installation rail (18) has a substantially U-shaped cross-section with two arms (32, 34) that extend in the direction along the longitudinal axis (L) of the installation rail arrangement (10) at a distance from each other so as to receive an associated primary structure component (12) therebetween.

4. The aircraft according to any one of claims 1 to 3,
wherein the first primary structure component (12a) and the associated first connecting portion (20a) are connected to each other by means of a first fastening bolt (36a) which is received in a corresponding first bore (38a) extending through the first primary structure component (12a) and the associated first connecting portion (20a) in a direction substantially perpendicular to the longitudinal axis (L) of the installation rail arrangement (10),
and/or wherein each arm (32, 34) of the first connecting portion (20a), in the region of a surface facing the first primary structure component (12a) is provided with a first teeth plate (44) which is adapted to interact with a complementary second teeth plate (46) provided in the region of a surface of the first primary structure component (12a) which faces the arm (32, 34) in order to prevent a displacement of the first connecting portion (20a) and the first primary structure component (12a) relative to each other in the direction along the longitudinal axis (L) of the installation rail arrangement (10).

5. The aircraft according to any one of claims 1 to 4,
wherein at least one of the plurality of load transmission elements (48) comprises:
- a bolt-shaped part (54) extending in a direction substantially parallel to the longitudinal axis (L) of the installation rail arrangement (10) and having a circumferential outer surface, wherein the circumferential outer surface includes in a longitudinal direction of the bolt-shaped part (54) two areas (80, 82) each including alternately on a circumferential path in a cross-sectional plane of the bolt-shaped part (54) at least one ridged section (60) and at least one plain section (62), wherein each ridged section (60) includes at least one ridge (64), and wherein the at least one ridge (64) in a first of the two areas (80, 82) has a positive pitch value and the at least one ridge (64) in a second of the two areas (82) has a negative pitch value, and
- a female fastener (84) being received in a receiving opening (86) provided in the second primary structure component (12b) so as to be displaceable relative to the second primary structure component (12b) in the direction of the longitudinal axis (L) of the installation rail arrangement (10) and comprising a tubular part (88) extending in a direction substantially parallel to the longitudinal axis (L) of the installation rail arrangement (10) and having a circumferential inner surface (19), wherein the circumferential inner surface (90) includes alternately on a circumferential path in a cross-sectional plane of the tubular part (88) of the female fastener (84) at least one ridged section (92) and at least one plain section (94), wherein each ridged section (92) includes at least one ridge (96) having a negative pitch value.

6. The aircraft according to claim 5,
wherein the first contact face (50) is formed by a portion of an outer surface of the female fastener (84), and wherein the second contact face (52) that is adapted to interact with the first contact face (50) is formed by a portion of an inner surface of the receiving opening (86) provided in the second primary structure element (12b) and extends opposite to the first contact face (50).

7. The aircraft according to claim 5 or 6,
wherein the second fastening bolt (36b) comprises:
- a tubular part (68) extending in a direction substantially parallel to the longitudinal axis (L) of the installation rail arrangement (10) and having a circumferential inner surface (56), wherein the circumferential inner surface (56) includes alternately on a circumferential path in a cross-sectional plane of the tubular part (68) at least one ridged section (60) and at least one plain section (62), wherein each ridged section (60) includes at least one ridge (64) having a positive pitch value,
wherein the bolt-shaped part (54) of the load transmission element (48) is configured to be inserted into the female fastener (84) and the tubular part (68) of the second fastening bolt (36b) in a state where a cross-sectional projection of the at least one ridged section (60) of the bolt-shaped part (54) coincides with a cross-sectional projection of the at least one plain section (74) of the tubular part (68) and with a cross-sectional projection of the at least one plain section (94) of the female fastener (84) until the first and the second contact surface (50, 52) are arranged at a desired distance from each other so as to define the gap (g), and
wherein the bolt-shaped part (54) is configured to be rotated relative to the tubular part (68) and the female fastener (84), thereby engaging respective ridges (64, 76) of the first area (80) of the bolt-shaped part (54) and the tubular part (68) and engaging respective ridges (64, 96) of the second area (82) of the bolt-shaped part (54) and the female fastener (84), so as secure the load transmission element (48) to the second fastening bolt (36b).

8. The aircraft according to any one of claims 1 to 7,
wherein at least one of the plurality of load transmission elements (48) comprises:
- a fastening portion (100) which is rigidly connected, in particular glued, to a second primary structure component (12b), the fastening portion (100) in particular extending in a direction substantially parallel to the longitudinal axis (L) of the installation rail arrangement (10); and
- a stopper portion (102), wherein the first contact face (50) is formed on the stopper portion (102) and extends in a direction substantially perpendicular to the longitudinal axis (L) of the installation rail arrangement (10).

9. The aircraft according to claim 8,
wherein the second contact face (52) that is adapted to interact with the first contact face (50) formed on the stopper portion (102) of the load transmission element (48) is formed on an abutting element (104) of the installation rail (18) and extends opposite to the first contact face (50) in a direction substantially perpendicular to the longitudinal axis (L) of the installation rail arrangement (10).

10. The aircraft according to any one of claims 1 to 9,
wherein the carrier portion (21) of the installation rail (18) is provided with a plurality of openings (26) arranged one behind another in the direction of the longitudinal axis (L) of the installation rail arrangement (10), the openings (26) being adapted to receive a fastener (28) for attaching an equipment component (30) to the installation rail (18), the equipment component (30) in particular being designed in the form of a galley rod or a reinforcement element.

11. The aircraft according to any one of claims 1 to 9,
wherein a free edge (19) of the installation rail (18) has a scalloped shape.

12. The aircraft according to any one of claims 1 to 11, further comprising:
- a second installation rail arrangement (10), comprising:
- an installation rail (18) including
-- a plurality of connecting portions (20), each connecting portion (20) being connectable to an associated primary structure component (12) in order to fasten the installation rail (18) to the plurality of primary structure components (12), and
-- a carrier portion (21) extending from the plurality of connecting portions (20) in the direction along the longitudinal axis (L) of the installation rail arrangement (10) and being adapted to carry at least one equipment component (30),
wherein a selected pair of a first primary structure component (12a) and an associated first connecting portion (20a) is configured to define a fixed bearing adapted to connect the first primary structure component (12a) and the associated first connecting portion (20a) so as to be non-displaceable relative to each other in the direction along the longitudinal axis (L) of the installation rail arrangement (10), and
wherein at least one pair of a second primary structure component (12b) and an associated second connecting portion (20b) is configured to define a floating bearing adapted to connect the second primary structure component (12b) and the associated second connecting portion (20b) so as to allow a relative displacement between the second primary structure component (12b) and the associated second connecting portion (20b) in the direction along the longitudinal axis (L) of the installation rail arrangement (10); and
- a plurality of load transmission elements (48), each load transmission element (48) being rigidly connected to one of the installation rail (18) and the second primary structure component (12b) and each load transmission element (48) comprising a first contact face (50) adapted to interact with a complementary second contact face (52) provided on the other one of the installation rail (18) and the second primary structure component (12b), in order to transfer loads acting in the direction along the longitudinal axis (L) of the installation rail arrangement (10) from the installation rail (18) to the second primary structure component (12b), wherein, in a first operational state of the installation rail arrangement (10), a gap (g) is present between the first and the second contact face (50, 52), in the direction along the longitudinal axis (L) of the installation rail arrangement (10), and wherein, in a second operational state of the installation rail arrangement (10), the first and the second contact face (50, 52) contact each other,
wherein the first and the second installation rail arrangement (10) are arranged relative to each other in such a manner that, in the first operational state of the first and the second installation rail arrangement (10) a gap (G) is present between opposing end faces (108, 110) of the installation rail (18) of the first installation rail arrangement (10) and the installation rail (18) of the second installation rail arrangement (10), in a direction along a longitudinal axis (L) of the installation rail system (106), and that, in the second operational state of the first and the second installation rail arrangement (10), the opposing end faces (108, 110) of the installation rail (18) of the first installation rail arrangement (10) and the installation rail (18) of the second installation rail arrangement (10) contact each other.

## Patentansprüche

1. Flugzeug, das eine Montageschienenanordnung (10) aufweist, wobei die Montageschienenanordnung (10) Folgendes umfasst:
- mehrere Primärstrukturkomponenten (12), die in dem Flugzeug in einer entlang einer Längsachse (L) der Montageschienenanordnung (10) verlaufenden Richtung hintereinander angeordnet sind;
- eine Montageschiene (18), die Folgendes aufweist:
- mehrere Verbindungsteile (20), wobei jedes Verbindungsteil (20) mit einer zugehörigen Primärstrukturkomponente (12) verbindbar ist, um die Montageschiene (18) an den mehreren Primärstrukturkomponenten (12) zu befestigen, und
- einen Trägerteil (21), der sich von den mehreren Verbindungsteilen (20) in der entlang der Längsachse (L) der Montageschienenanordnung (10) verlaufenden Richtung erstreckt und dazu ausgeführt ist, mindestens eine Einrichtungskomponente (30) zu tragen,
wobei ein ausgewähltes Paar aus einer ersten Primärstrukturkomponente (12a) und einem zugehörigen ersten Verbindungsteil (20a) dazu konfiguriert ist, ein Festlager zu definieren, das dazu ausgeführt ist, die erste Primärstrukturkomponente (12a) und den zugehörigen ersten Verbindungsteil (20a) so zu verbinden, dass sie bezüglich einander in der entlang der Längsachse (L) der Montageschienenanordnung (10) verlaufenden Richtung nicht verschiebbar sind, und
wobei mindestens ein Paar aus einer zweiten Primärstrukturkomponente (12b) und einem zugehörigen zweiten Verbindungsteil (20b) dazu konfiguriert ist, ein Loslager zu definieren, das dazu ausgeführt ist, die zweite Primärstrukturkomponente (12b) und den zugehörigen zweiten Verbindungsteil (20b) zu verbinden, um eine relative Verschiebung zwischen der zweiten Primärstrukturkomponente (12b) und dem zugehörigen zweiten Verbindungsteil (20b) in der entlang der Längsachse (L) der Montageschienenanordnung (10) verlaufenden Richtung zu gestatten; und
- mehrere Lastübertragungselemente (48), wobei jedes Lastübertragungselement (48) starr mit einer von der Montageschiene (18) und der zweiten Primärstrukturkomponente (12b) verbunden ist und jedes Lastübertragungselement (48) eine erste Kontaktfläche (50) umfasst, die dazu ausgeführt ist, mit einer komplementären zweiten Kontaktfläche (52), die an der anderen von der Montageschiene (18) und der zweiten Primärstrukturkomponente (12b) vorgesehen ist, zu interagieren, um in der entlang der Längsachse (L) der Montageschienenanordnung (10) verlaufenden Richtung wirkende Lasten von der Montageschiene (18) auf die zweite Primärstrukturkomponente (12b) zu übertragen, wobei in einem ersten Betriebszustand der Montageschienenanordnung (10) zwischen der ersten und der zweiten Kontaktfläche (50, 52) in der entlang der Längsachse (L) der Montageschienenanordnung (10) verlaufenden Richtung eine Lücke (g) vorhanden ist, und wobei in einem zweiten Betriebszustand der Montageschienenanordnung (10) die erste und die zweite Kontaktfläche (50, 52) einander berühren,
wobei die zweite Primärstrukturkomponente (12b) und ein zugehöriger zweiter Verbindungsteil (20b) mittels eines zweiten Befestigungsbolzens (36b), der in einer entsprechenden zweiten Bohrung (38b), die durch die zweite Primärstrukturkomponente (12b) und den zugehörigen zweiten Verbindungsteil (20b) in einer im Wesentlichen senkrecht zu der Längsachse (L) der Montageschienenanordnung (10) verlaufenden Richtung verläuft, aufgenommen ist, wobei der zweite Befestigungsbolzen (36b) und ein erster Teil (40) der zweiten Bohrung (38b), der durch das zweite Verbindungselement (20b) verläuft, dahingehend geformt und dimensioniert sind, die formschlüssige Aufnahme des zweiten Befestigungsbolzens (36b) in dem ersten Teil (40) der zweiten Bohrung (38b) zu gestatten, und wobei der zweite Befestigungsbolzen (36b) und ein zweiter Teil (42) der zweiten Bohrung (38b), der durch die zweite Primärstrukturkomponente (12b) verläuft, dahingehend geformt und dimensioniert sind, eine Verschiebung des zweiten Befestigungsbolzens (36b) in dem zweiten Teil (42) der zweiten Bohrung (38b) in der entlang der Längsachse (L) der Montageschienenanordnung (10) verlaufenden Richtung zu gestatten,
wobei mindestens eines der mehreren Lastübertragungselemente (48) Folgendes umfasst:
- einen bolzenförmigen Teil (54), der sich in einer im Wesentlichen parallel zu der Längsachse (L) der Montageschienenanordnung (10) verlaufenden Richtung erstreckt und eine äußere Umfangsfläche aufweist, wobei die äußere Umfangsfläche abwechselnd auf einer Umfangsbahn in einer Querschnittsebene des bolzenförmigen Teils (54) mindestens einen gezahnten Abschnitt (60) und mindestens einen ebenen Abschnitt (62) aufweist, wobei jeder gezahnte Abschnitt (60) mindestens einen Zahn (64) aufweist, und
- einen Anschlagteil (66),
wobei die erste Kontaktfläche (50) an dem Anschlagteil (66) gebildet ist und sich in einer im Wesentlichen senkrecht zu der Längsachse (L) der Montageschienenanordnung (10) verlaufenden Richtung erstreckt, und wobei die zweite Kontaktfläche (52), die zum Interagieren mit der ersten Kontaktfläche (50) ausgeführt ist, an dem zweiten Primärstrukturelement (12b) gebildet ist und sich gegenüber der ersten Kontaktfläche (50) in einer im Wesentlichen senkrecht zu der Längsachse (L) der Montageschienenanordnung (10) verlaufenden Richtung erstreckt,
wobei der zweite Befestigungsbolzen (36b) Folgendes umfasst:
- einen röhrenförmigen Teil (68), der sich in einer im Wesentlichen parallel zu der Längsachse (L) der Montageschienenanordnung (10) verlaufenden Richtung erstreckt und eine innere Umfangsfläche aufweist, wobei die innere Umfangsfläche abwechselnd auf einer Umfangsbahn in einer Querschnittsebene des röhrenförmigen Teils (68) mindestens einen gezahnten Abschnitt (72) und mindestens einen ebenen Abschnitt (74) aufweist, wobei jeder gezahnte Abschnitt (72) mindestens einen Zahn (76) aufweist,
wobei der bolzenförmige Teil (54) des Lastübertragungselements (48) zum Einführen in den röhrenförmigen Teil (68) des zweiten Befestigungsbolzens (36b) in einem Zustand, in dem eine Querschnittsprojektion des mindestens einen gezahnten Abschnitts (60) des bolzenförmigen Teils (54) mit einer Querschnittsprojektion des mindestens einen ebenen Abschnitts (74) des röhrenförmigen Teils (68) zusammenfällt, bis die erste und die zweite Kontaktfläche (50, 52) in einem gewünschten Abstand voneinander angeordnet sind, um die Lücke (G) zu definieren, konfiguriert ist, und
wobei der bolzenförmige Teil (54) dazu konfiguriert ist, bezüglich des röhrenförmigen Teils (68) gedreht zu werden, wodurch er jeweilige Zähne des bolzenförmigen Teils (54) und des röhrenförmigen Teils in Eingriff nimmt, um das Lastübertragungselement (48) an dem zweiten Befestigungsbolzen (36b) zu fixieren.

2. Flugzeug nach Anspruch 1,
wobei die Lücke (g), die zwischen der ersten und der zweiten Kontaktfläche (50, 52) im ersten Betriebszustand der Montageschienenanordnung (10) besteht, so dimensioniert ist, dass die Lücke (g) aufgrund einer thermisch bedingten Neupositionierung der Primärstrukturkomponenten (12) bei Änderung des Betriebszustands der Montageschienenanordnung (10) aus dem ersten Betriebszustand in den zweiten Betriebszustand beseitigt wird.

3. Flugzeug nach Anspruch 1 oder 2,
wobei jeder der mehreren Verbindungsteile (20) der Montageschiene (18) einen im Wesentlichen U-förmigen Querschnitt mit zwei Armen (32, 34) hat, die sich in der entlang der Längsachse (L) der Montageschienenanordnung (10) verlaufenden Richtung in einem Abstand voneinander erstrecken, um eine zugehörige Primärstrukturkomponente (12) dazwischen aufzunehmen.

4. Flugzeug nach einem der Ansprüche 1 bis 3,
wobei die erste Primärstrukturkomponente (12a) und der zugehörige erste Verbindungsteil (20a) mittels eines ersten Befestigungsbolzens (36a), der in einer entsprechenden ersten Bohrung (38a), die durch die erste Primärstrukturkomponente (12a) und den zugehörigen ersten Verbindungsteil (20a) in einer im Wesentlichen senkrecht zu der Längsachse (L) der Montageschienenanordnung (10) verlaufenden Richtung verläuft, miteinander verbunden sind,
und/oder wobei jeder Arm (32, 34) des ersten Verbindungsteils (20a) in der Region einer der ersten Primärstrukturkomponente (12a) zugekehrten Fläche mit einer ersten Zahnplatte (44) versehen ist, die dazu ausgeführt ist, mit einer komplementären zweiten Zahnplatte (46), die in der Region einer Fläche der ersten Primärstrukturkomponente (12a), die dem Arm (32, 34) zugekehrt ist, vorgesehen ist, zu interagieren, um eine Verschiebung des ersten Verbindungsteils (20a) und der ersten Primärstrukturkomponente (12a) bezüglich einander in der entlang der Längsachse (L) der Montageschienenanordnung (10) verlaufenden Richtung zu verhindern.

5. Flugzeug nach einem der Ansprüche 1 bis 4,
wobei mindestens eines der mehreren Lastübertragungselemente (48) Folgendes umfasst:
- einen bolzenförmigen Teil (54), der sich in einer im Wesentlichen parallel zu der Längsachse (L) der Montageschienenanordnung (10) verlaufenden Richtung erstreckt und eine äußere Umfangsfläche aufweist, wobei die äußere Umfangsfläche in einer Längsrichtung des bolzenförmigen Teils (54) zwei Bereiche (80, 82) aufweist, die jeweils abwechselnd auf einer Umfangsbahn in einer Querschnittsebene des bolzenförmigen Teils (54) mindestens einen gezahnten Abschnitt (60) und mindestens einen ebenen Abschnitt (62) aufweisen, wobei jeder gezahnte Abschnitt (60) mindestens einen Zahn (64) aufweist, und wobei der mindestens eine Zahn (64) in einem ersten der beiden Bereiche (80, 82) einen positiven Neigungswert hat und der mindestens eine Zahn (64) in dem zweiten der beiden Bereiche (82) einen negativen Neigungswert aufweist, und
- ein Aufnahmebefestigungselement (84), das in einer in der zweiten Primärstrukturkomponente (12b) vorgesehenen Aufnahmeöffnung (86) so aufgenommen ist, dass es bezüglich der zweiten Primärstrukturkomponente (12b) in der Richtung der Längsachse (L) der Montageschienenanordnung (10) verschiebbar ist, und einen röhrenförmigen Teil (88) umfasst, der sich in einer im Wesentlichen parallel zu der Längsachse (L) der Montageschienenanordnung (10) verlaufenden Richtung erstreckt und eine innere Umfangsfläche (19) aufweist, wobei die innere Umfangsfläche (90) abwechselnd auf der Umfangsbahn in einer Querschnittsebene des röhrenförmigen Teils (88) des Aufnahmebefestigungselements (84) mindestens einen gezahnten Abschnitt (92) und mindestens einen ebenen Abschnitt (94) aufweist, wobei jeder gezahnte Abschnitt (92) mindestens einen Zahn (96) aufweist, der einen negativen Neigungswert hat.

6. Flugzeug nach Anspruch 5,
wobei die erste Kontaktfläche (50) durch einen Teil einer Außenfläche des Aufnahmebefestigungselements (84) gebildet ist und wobei die zweite Kontaktfläche (52), die zum Interagieren mit der ersten Kontaktfläche (50) ausgeführt ist, durch einen Teil einer Innenfläche der in dem zweiten Primärstrukturelement (12b) vorgesehenen Aufnahmeöffnung (86) gebildet ist und sich gegenüber der Kontaktfläche (50) erstreckt.

7. Flugzeug nach Anspruch 5 oder 6,
wobei der zweite Befestigungsbolzen (36b) Folgendes umfasst:
- einen röhrenförmigen Teil (68), der sich in einer im Wesentlichen parallel zu der Längsachse (L) der Montageschienenanordnung (10) verlaufenden Richtung erstreckt und eine innere Umfangsfläche (56) aufweist, wobei die innere Umfangsfläche (56) abwechselnd auf einer Umfangsbahn in einer Querschnittsebene des röhrenförmigen Teils (68) mindestens einen gezahnten Abschnitt (60) und mindestens einen ebenen Abschnitt (62) aufweist, wobei jeder gezahnte Abschnitt (60) einen Zahn (64) mit einem positiven Neigungswert hat,
wobei der bolzenförmige Teil (54) des Lastübertragungselements (48) zum Einführen in das Aufnahmebefestigungselement (84) und den röhrenförmigen Teil (68) des zweiten Befestigungsbolzens (36b) in einem Zustand, in dem eine Querschnittsprojektion des mindestens einen gezahnten Abschnitts (60) des bolzenförmigen Teils (54) mit einer Querschnittsprojektion des mindestens einen ebenen Abschnitts (74) des röhrenförmigen Teils (68) und mit einer Querschnittsprojektion des mindestens einen ebenen Abschnitts (94) des Aufnahmebefestigungselements (84) zusammenfällt, bis die erste und die zweite Kontaktfläche (50, 52) in einem gewünschten Abstand voneinander angeordnet sind, um die Lücke (g) zu definieren, konfiguriert ist, und
wobei der bolzenförmige Teil (54) dazu konfiguriert ist, bezüglich des röhrenförmigen Teils (68) und des Aufnahmebefestigungselements (84) gedreht zu werden, wodurch er jeweilige Zähne (64, 76) des ersten Bereichs (80) des bolzenförmigen Teils (54) und des röhrenförmigen Teils (68) in Eingriff nimmt und jeweilige Zähne (64, 96) des zweiten Bereichs (82) des bolzenförmigen Teils (54) und des Aufnahmebefestigungselements (84) in Eingriff nimmt, um das Lastübertragungselement (48) an dem zweiten Befestigungsbolzen (36b) zu fixieren.

8. Flugzeug nach einem der Ansprüche 1 bis 7,
wobei mindestens eines der mehreren Lastübertragungselemente (48) Folgendes umfasst:
- einen Befestigungsteil (100), der mit einer zweiten Primärstrukturkomponente (12b) starr verbunden, insbesondere verklebt, ist, wobei sich der Befestigungsteil (100) insbesondere in einer im Wesentlichen parallel zu der Längsachse (L) der Montageschienenanordnung (10) verlaufenden Richtung erstreckt; und
- einen Anschlagteil (102), wobei die erste Kontaktfläche (50) an dem Anschlagteil (102) gebildet ist und sich in einer im Wesentlichen senkrecht zu der Längsachse (L) der Montageschienenanordnung (10) verlaufenden Richtung erstreckt.

9. Flugzeug nach Anspruch 8,
wobei die zweite Kontaktfläche (52), die zum Interagieren mit der ersten Kontaktfläche (50), die an dem Anschlagteil (102) des Lastübertragungselements (48) gebildet ist, ausgeführt ist, an einem Anlageelement (104) der Montageschiene (18) gebildet ist und sich gegenüber der ersten Kontaktfläche (50) in einer im Wesentlichen senkrecht zu der Längsachse (L) der Montageschienenanordnung (10) verlaufenden Richtung erstreckt.

10. Flugzeug nach einem der Ansprüche 1 bis 9,
wobei der Trägerteil (21) der Montageschiene (18) mit mehreren Öffnungen (26) versehen ist, die in der Richtung der Längsachse (L) der Montageschienenanordnung (10) hintereinander angeordnet sind, wobei die Öffnungen (26) dazu ausgeführt sind, ein Befestigungselement (28) zum Befestigen einer Einrichtungskomponente (30) an der Montageschiene (18) aufzunehmen, wobei die Einrichtungskomponente (30) insbesondere in Form einer Bordküchenstange oder eines Verstärkungselements konstruiert ist.

11. Flugzeug nach einem der Ansprüche 1 bis 9,
wobei ein freier Rand (19) der Montageschiene (18) eine Bogenform aufweist.

12. Flugzeug nach einem der Ansprüche 1 bis 11, ferner umfassend:
- eine zweite Montageschienenanordnung (10), die Folgendes umfasst:
- eine Montageschiene (18), die Folgendes aufweist:
- mehrere Verbindungsteile (20), wobei jedes Verbindungsteil (20) mit einer zugehörigen Primärstrukturkomponente (12) verbindbar ist, um die Montageschiene (18) an den mehreren Primärstrukturkomponenten (12) zu befestigen, und
- einen Trägerteil (21), der sich von den mehreren Verbindungsteilen (20) in der entlang der Längsachse (L) der Montageschienenanordnung (10) verlaufenden Richtung erstreckt und dazu ausgeführt ist, mindestens eine Einrichtungskomponente (30) zu tragen,
wobei ein ausgewähltes Paar aus einer ersten Primärstrukturkomponente (12a) und einem zugehörigen ersten Verbindungsteil (20a) dazu konfiguriert ist, ein Festlager zu definieren, das dazu ausgeführt ist, die erste Primärstrukturkomponente (12a) und den zugehörigen ersten Verbindungsteil (20a) so zu verbinden, dass sie bezüglich einander in der entlang der Längsachse (L) der Montageschienenanordnung (10) verlaufenden Richtung nicht verschiebbar sind, und
wobei mindestens ein Paar aus einer zweiten Primärstrukturkomponente (12b) und einem zugehörigen zweiten Verbindungsteil (20b) dazu konfiguriert ist, ein Loslager zu definieren, das dazu ausgeführt ist, die zweite Primärstrukturkomponente (12b) und den zugehörigen zweiten Verbindungsteil (20b) zu verbinden, um eine relative Verschiebung zwischen der zweiten Primärstrukturkomponente (12b) und dem zugehörigen zweiten Verbindungsteil (20b) in der entlang der Längsachse (L) der Montageschienenanordnung (10) verlaufenden Richtung zu gestatten; und
- mehrere Lastübertragungselemente (48), wobei jedes Lastübertragungselement (48) starr mit einer von der Montageschiene (18) und der zweiten Primärstrukturkomponente (12b) verbunden ist und jedes Lastübertragungselement (48) eine erste Kontaktfläche (50) umfasst, die dazu ausgeführt ist, mit einer komplementären zweiten Kontaktfläche (52), die an der anderen von der Montageschiene (18) und der zweiten Primärstrukturkomponente (12b) vorgesehen ist, zu interagieren, um in der entlang der Längsachse (L) der Montageschienenanordnung (10) verlaufenden Richtung wirkende Lasten von der Montageschiene (18) auf die zweite Primärstrukturkomponente (12b) zu übertragen, wobei in einem ersten Betriebszustand der Montageschienenanordnung (10) zwischen der ersten und der zweiten Kontaktfläche (50, 52) in der entlang der Längsachse (L) der Montageschienenanordnung (10) verlaufenden Richtung eine Lücke (g) vorhanden ist, und wobei in einem zweiten Betriebszustand der Montageschienenanordnung (10) die erste und die zweite Kontaktfläche (50, 52) einander berühren,
wobei die erste und die zweite Montageschienenanordnung (10) bezüglich einander so angeordnet sind, dass im ersten Betriebszustand der ersten und der zweiten Montageschienenanordnung (10) zwischen einander gegenüberliegenden Endflächen (108, 110) der Montageschiene (18) der ersten Montageschienenanordnung (10) und der Montageschiene (18) der zweiten Montageschienenanordnung (10) in einer entlang einer Längsachse (L) des Montageschienensystems (106) verlaufenden Richtung eine Lücke (G) vorhanden ist, und dass im zweiten Betriebszustand der ersten und der zweiten Montageschienenanordnung (10) die einander gegenüberliegenden Endflächen (108, 110) der Montageschiene (18) der ersten Montageschienenanordnung (10) und der Montageschiene (18) der zweiten Montageschienenanordnung (10) einander berühren.

## Revendications

1. Aéronef comportant un agencement de rail d'installation (10), l'agencement de rail d'installation (10) comprenant :
- une pluralité de composants structurels primaires (12) agencés dans l'aéronef les uns derrière les autres dans une direction le long d'un axe longitudinal (L) de l'agencement de rail d'installation (10) ;
- un rail d'installation (18) comportant
- une pluralité de portions de connexion (20), chaque portion de connexion (20) pouvant être connectée à un composant structurel primaire associé (12) afin de fixer le rail d'installation (18) à la pluralité de composants structurels primaires (12), et
- une portion de support (21) s'étendant depuis la pluralité de portions de connexion (20) dans la direction le long de l'axe longitudinal (L) de l'agencement de rail d'installation (10) et étant prévue pour porter au moins un composant d'équipement (30),
une paire sélectionnée d'un premier composant structurel primaire (12a) et d'une première portion de connexion associée (20a) étant configurée pour définir un palier fixe prévu pour connecter le premier composant structurel primaire (12a) et la première portion de connexion associée (20a) de manière à ce qu'ils ne puissent pas être déplacés l'un par rapport à l'autre dans la direction le long de l'axe longitudinal (L) de l'agencement de rail d'installation (10), et
au moins une paire d'un deuxième composant structurel primaire (12b) et d'une deuxième portion de connexion associée (20b) étant configurée pour définir un palier flottant prévu pour connecter le deuxième composant structurel primaire (12b) et la deuxième portion de connexion associée (20b) de manière à permettre un déplacement relatif entre le deuxième composant structurel primaire (12b) et la deuxième portion de connexion associée (20b) dans la direction le long de l'axe longitudinal (L) de l'agencement de rail d'installation (10) ; et
- une pluralité d'éléments de transfert de charge (48), chaque élément de transfert de charge (48) étant connecté rigidement à l'un parmi le rail d'installation (18) et le deuxième composant structurel primaire (12b) et chaque élément de transfert de charge (48) comprenant une première face de contact (50) prévue pour coopérer avec une deuxième face de contact complémentaire (52) prévue sur l'autre parmi le rail d'installation (18) et le deuxième composant structurel primaire (12b), afin de transférer des charges agissant dans la direction le long de l'axe longitudinal (L) de l'agencement de rail d'installation (10) depuis le rail d'installation (18) jusqu'au deuxième composant structurel primaire (12b), un espace (g) existant entre la première et la deuxième face de contact (50, 52) dans la direction le long de l'axe longitudinal (L) de l'agencement de rail d'installation (10) dans un premier état de fonctionnement de l'agencement de rail d'installation (10), et, dans un deuxième état de fonctionnement de l'agencement de rail d'installation (10), la première et la deuxième face de contact (50, 52) venant en contact l'une avec l'autre,
le deuxième composant structurel primaire (12b) et une deuxième portion de connexion associée (20b) étant connectés l'un à l'autre au moyen d'un deuxième boulon de fixation (36b) qui est reçu dans un deuxième alésage correspondant (38b) s'étendant à travers le deuxième composant structurel primaire (12b) et la deuxième portion de connexion associée (20b) dans une direction sensiblement perpendiculaire à l'axe longitudinal (L) de l'agencement de rail d'installation (10), le deuxième boulon de fixation (36b) et une première portion (40) du deuxième alésage (38b) qui s'étend à travers le deuxième élément de connexion (20b) étant formés et dimensionnés de manière à permettre au deuxième boulon de fixation (36b) d'être reçu dans la première portion (40) du deuxième alésage (38b) par engagement par correspondance de formes, et le deuxième boulon de fixation (36b) et une deuxième portion (42) du deuxième alésage (38b) qui s'étend à travers le deuxième composant structurel primaire (12b) étant formés et dimensionnés de manière à permettre un déplacement du deuxième boulon de fixation (36b) dans la deuxième portion (42) du deuxième alésage (38b) dans la direction le long de l'axe longitudinal (L) de l'agencement de rail d'installation (10),
au moins l'un parmi la pluralité d'éléments de transfert de charges (48) comprenant :
- une partie en forme de boulon (54) s'étendant dans une direction sensiblement parallèle à l'axe longitudinal (L) de l'agencement de rail d'installation (10) et ayant une surface extérieure circonférentielle, la surface extérieure circonférentielle comportant en alternance, sur une trajectoire circonférentielle dans un plan en coupe transversale de la partie en forme de boulon (54), au moins une section nervurée (60) et au moins une section lisse (62), chaque section nervurée (60) comportant au moins une nervure (64), et
- une portion de butée (66),
la première face de contact (50) étant formée sur la portion de butée (66) et s'étendant dans une direction sensiblement perpendiculaire à l'axe longitudinal (L) de l'agencement de rail d'installation (10), et la deuxième face de contact (52) qui est prévue pour coopérer avec la première face de contact (50) étant formée sur le deuxième élément structurel primaire (12b) et s'étendant à l'opposé de la première face de contact (50) dans une direction sensiblement perpendiculaire à l'axe longitudinal (L) de l'agencement de rail d'installation (10),
le deuxième boulon de fixation (36b) comprenant :
- une partie tubulaire (68) s'étendant dans une direction sensiblement parallèle à l'axe longitudinal (L) de l'agencement de rail d'installation (10) et ayant une surface intérieure circonférentielle, la surface intérieure circonférentielle comportant, en alternance sur une trajectoire circonférentielle dans un plan en coupe transversale de la partie tubulaire (68), au moins une section nervurée (72) et au moins une section lisse (74), chaque section nervurée (72) comportant au moins une nervure (76),
la partie en forme de boulon (54) de l'élément de transfert de charge (48) étant configurée pour être insérée dans la partie tubulaire (68) du deuxième boulon de fixation (36b) dans un état dans lequel une projection en coupe transversale de l'au moins une section nervurée (60) de la partie en forme de boulon (54) coïncide avec une projection en coupe transversale de l'au moins une section lisse (74) de la partie tubulaire (68) jusqu'à ce que la première et la deuxième surface de contact (50, 52) soient disposées à une distance souhaitée l'une de l'autre de manière à définir l'espace (G), et
la partie en forme de boulon (54) étant configurée pour être tournée par rapport à la partie tubulaire (68), pour ainsi mettre en prise des nervures respectives de la partie en forme de boulon (54) et de la partie tubulaire de manière à fixer l'élément de transfert de charge (48) au deuxième boulon de fixation (36b).

2. Aéronef selon la revendication 1, dans lequel l'espace (g) qui existe entre la première et la deuxième face de contact (50, 52) dans le premier état de fonctionnement de l'agencement de rail d'installation (10) est dimensionné de manière à ce que l'espace (g) soit éliminé du fait d'un repositionnement, provoqué par la chaleur, des composants structurels primaires (12) lors du changement d'état de fonctionnement de l'agencement de rail d'installation (10) du premier état de fonctionnement au deuxième état de fonctionnement.

3. Aéronef selon la revendication 1 ou 2,
dans lequel chacune de la pluralité de portions de connexion (20) du rail d'installation (18) présente une section transversale essentiellement en forme de U avec deux bras (32, 34) qui s'étendent dans la direction le long de l'axe longitudinal (L) de l'agencement de rail d'installation (10) à une distance l'un de l'autre de manière à recevoir entre eux un composant structurel primaire associé (12).

4. Aéronef selon l'une quelconque des revendications 1 à 3,
dans lequel le premier composant structurel primaire (12a) et la première portion de connexion associée (20a) sont connectés l'un à l'autre au moyen d'un premier boulon de fixation (36a) qui est reçu dans un premier alésage correspondant (38a) s'étendant à travers le premier composant structurel primaire (12a) et la première portion de connexion associée (20a) dans une direction sensiblement perpendiculaire à l'axe longitudinal (L) de l'agencement de rail d'installation (10),
et/ou dans lequel chaque bras (32, 34) de la première portion de connexion (20a), dans la région d'une surface faisant face au premier composant structurel primaire (12a), est pourvu d'une première plaque dentée (44) qui est prévue pour coopérer avec une deuxième plaque dentée complémentaire (46) prévue dans la région d'une surface du premier composant structurel primaire (12a) qui fait face au bras (32, 34) afin d'empêcher un déplacement de la première portion de connexion (20a) et du premier composant structurel primaire (12a) l'un par rapport à l'autre dans la direction le long de l'axe longitudinal (L) de l'agencement de rail d'installation (10).

5. Aéronef selon l'une quelconque des revendications 1 à 4,
dans lequel au moins l'un de la pluralité d'éléments de transfert de charge (48) comprend :
- une partie en forme de boulon (54) s'étendant dans une direction sensiblement parallèle à l'axe longitudinal (L) de l'agencement de rail d'installation (10) et ayant une surface extérieure circonférentielle, la surface extérieure circonférentielle comportant, dans une direction longitudinale de la partie en forme de boulon (54), deux zones (80, 82) comportant chacune, en alternance sur une trajectoire circonférentielle dans un plan en coupe transversale de la partie en forme de boulon (54), au moins une section nervurée (60) et au moins une section lisse (62), chaque section nervurée (60) comportant au moins une nervure (64), et l'au moins une nervure (64) dans l'une des deux zones (80, 82), ayant une valeur de pas positive et l'au moins une nervure (64) dans l'une des deux zones (82) ayant une valeur de pas négative, et
- une fixation femelle (84) étant reçue dans une ouverture de réception (86) prévue dans le deuxième composant structurel primaire (12b) de manière à pouvoir être déplacée par rapport au deuxième composant structurel primaire (12b) dans la direction de l'axe longitudinal (L) de l'agencement de rail d'installation (10) et comprenant une partie tubulaire (88) s'étendant dans une direction sensiblement parallèle à l'axe longitudinal (L) de l'agencement de rail d'installation (10) et ayant une surface intérieure circonférentielle (19), la surface intérieure circonférentielle (90) comportant en alternance sur une trajectoire circonférentielle dans un plan en coupe transversale de la partie tubulaire (88) de la fixation femelle (84), au moins une section nervurée (92) et au moins une section lisse (94), chaque section nervurée (92) comportant au moins une nervure (96) ayant une valeur de pas négative.

6. Aéronef selon la revendication 5,
dans lequel la première face de contact (50) est formée par une portion d'une surface extérieure de la fixation femelle (84), et dans lequel la deuxième face de contact (52) qui est prévue pour coopérer avec la première face de contact (50) est formée par une portion d'une surface intérieure de l'ouverture de réception (86) prévue dans le deuxième élément structurel primaire (12b) et s'étend à l'opposé de la première face de contact (50).

7. Aéronef selon la revendication 5 ou 6,
dans lequel le deuxième boulon de fixation (36b) comprend :
- une partie tubulaire (68) s'étendant dans une direction sensiblement parallèle à l'axe longitudinal (L) de l'agencement de rail d'installation (10) et ayant une surface intérieure circonférentielle (56), la surface intérieure circonférentielle (56) comportant, en alternance sur une trajectoire circonférentielle dans un plan en coupe transversale de la partie tubulaire (68), au moins une section nervurée (60) et au moins une section lisse (62), chaque section nervurée (60) comportant au moins une nervure (64) ayant une valeur de pas positive,
la partie en forme de boulon (54) de l'élément de transfert de charge (48) étant configurée pour être insérée dans la fixation femelle (84) et la partie tubulaire (68) du deuxième boulon de fixation (36b), dans un état dans lequel une projection en coupe transversale de l'au moins une section nervurée (60) de la partie en forme de boulon (54) coïncide avec une projection en coupe transversale de l'au moins une section lisse (74) de la partie tubulaire (68) et avec une projection en coupe transversale de l'au moins une section lisse (94) de la fixation femelle (84), jusqu'à ce que la première et la deuxième surface de contact (50, 52) soient disposées à une distance souhaitée l'une de l'autre de manière à définir l'espace (g), et
la partie en forme de boulon (54) étant configurée pour être tournée par rapport à la partie tubulaire (68) et à la fixation femelle (84), pour ainsi venir en prise avec des nervures respectives (64, 76) de la première zone (80) de la partie en forme de boulon (54) et de la partie tubulaire (68) et pour venir en prise avec des nervures respectives (64, 96) de la deuxième zone (82) de la partie en forme de boulon (54) et de la fixation femelle (84) de manière à fixer l'élément de transfert de charge (48) au deuxième boulon de fixation (36b).

8. Aéronef selon l'une quelconque des revendications 1 à 7,
dans lequel au moins l'un parmi la pluralité d'éléments de transfert de charge (48) comprend :
- une portion de fixation (100) qui est connectée rigidement, en particulier collée, a un deuxième composant structurel primaire (12b), la portion de fixation (100) s'étendant en particulier dans une direction sensiblement parallèle à l'axe longitudinal (L) de l'agencement de rail d'installation (10) ; et
- une portion de butée (102), la première face de contact (50) étant formée sur la portion de butée (102) et s'étendant dans une direction sensiblement perpendiculaire à l'axe longitudinal (L) de l'agencement de rail d'installation (10).

9. Aéronef selon la revendication 8,
dans lequel la deuxième face de contact (52) qui est prévue pour coopérer avec la première face de contact (50) formée sur la portion de butée (102) de l'élément de transfert de charge (48) est formée sur un élément d'aboutement (104) du rail d'installation (18) et s'étend à l'opposé de la première face de contact (50) dans une direction sensiblement perpendiculaire à l'axe longitudinal (L) de l'agencement de rail d'installation (10).

10. Aéronef selon l'une quelconque des revendications 1 à 9,
dans lequel la portion de support (21) du rail d'installation (18) est pourvue d'une pluralité d'ouvertures (26) disposées les unes derrière les autres dans la direction de l'axe longitudinal (L) de l'agencement de rail d'installation (10), les ouvertures (26) étant prévues pour recevoir une fixation (28) pour la fixation d'un composant d'équipement (30) au rail d'installation (18), le composant d'équipement (30) étant en particulier conçu sous la forme d'une barre de cuisine ou d'un élément de renforcement.

11. Aéronef selon l'une quelconque des revendications 1 à 9,
dans lequel un bord libre (19) du rail d'installation (18) présente une forme échancrée.

12. Aéronef selon l'une quelconque des revendications 1 à 11, comprenant en outre :
- un deuxième agencement de rail d'installation (10), comprenant :
- un rail d'installation (18) comportant
- une pluralité de portions de connexion (20), chaque portion de connexion (20) pouvant être connectée à un composant structurel primaire associé (12) afin de fixer le rail d'installation (18) à la pluralité de composants structurels primaires (12), et
- une portion de support (21) s'étendant depuis la pluralité de portions de connexion (20) dans la direction le long de l'axe longitudinal (L) de l'agencement de rail d'installation (10) et étant prévue pour porter au moins un composant d'équipement (30),
une paire sélectionnée d'un premier composant structurel primaire (12a) et d'une première portion de connexion associée (20a) étant configurée pour définir un palier fixe prévu pour connecter le premier composant structurel primaire (12a) et la première portion de connexion associée (20a) de manière à ce qu'ils ne puissent pas être déplacés l'un par rapport à l'autre dans la direction le long de l'axe longitudinal (L) de l'agencement de rail d'installation (10), et
au moins une paire d'un deuxième composant structurel primaire (12b) et d'une deuxième portion de connexion associée (20b) étant configurée pour définir un palier flottant prévu pour connecter le deuxième composant structurel primaire (12b) et la deuxième portion de connexion associée (20b) de manière à permettre un déplacement relatif entre le deuxième composant structurel primaire (12b) et la deuxième portion de connexion associée (20b) dans la direction le long de l'axe longitudinal (L) de l'agencement de rail d'installation (10) ; et
- une pluralité d'éléments de transfert de charge (48), chaque élément de transfert de charge (48) étant connecté rigidement à l'un parmi le rail d'installation (18) et le deuxième composant structurel primaire (12b) et chaque élément de transfert de charge (48) comprenant une première face de contact (50) prévue pour coopérer avec une deuxième face de contact complémentaire (52) prévue sur l'autre parmi le rail d'installation (18) et le deuxième composant structurel primaire (12b), afin de transférer des charges agissant dans la direction le long de l'axe longitudinal (L) de l'agencement de rail d'installation (10) depuis le rail d'installation (18) jusqu'au deuxième composant structurel primaire (12b), un espace (g) existant entre la première et la deuxième face de contact (50, 52) dans la direction le long de l'axe longitudinal (L) de l'agencement de rail d'installation (10) dans un premier état de fonctionnement de l'agencement de rail d'installation (10), et, dans un deuxième état de fonctionnement de l'agencement de rail d'installation (10), la première et la deuxième face de contact (50, 52) venant en contact l'une avec l'autre,
le premier et le deuxième agencement de rail d'installation (10) étant disposés l'un par rapport à l'autre de telle sorte que dans le premier état de fonctionnement du premier et du deuxième agencement de rail d'installation (10), un espace (G) existe entre des faces d'extrémité opposée (108, 110) du rail d'installation (18) du premier agencement de rail d'installation (10) et du rail d'installation (18) du deuxième agencement de rail d'installation (10), dans une direction le long d'un axe longitudinal (L) du système de rail d'installation (106), et de telle sorte que, dans le deuxième état de fonctionnement du premier et du deuxième agencement de rail d'installation (10), les faces d'extrémité opposée (108, 110) du rail d'installation (18) du premier agencement de rail d'installation (10) et du rail d'installation (18) du deuxième agencement de rail d'installation (10) soient en contact l'une avec l'autre.
